# EUROPEAN PATENT APPLICATION

(11) **EP 4 432 715 A1**
(43) Date of publication of application: **18.09.2024**
(21) Application number: 22914070.2
(22) Date of filing: 06.12.2022
(51) Int. Cl.: H04W 16/10, H04W 28/16, H04W 72/04

(54) **WIRELESS DEVICE, RESOURCE MANAGEMENT METHOD, AND COMMUNICATION SYSTEM**

(30) Priority: 30.12.2021 CN 202111661748
(71) Applicant: Huawei Technologies Co., Ltd., Shenzhen, Guangdong 518129 (CN)
(72) Inventor: TANG, Xiaowei, Shenzhen, Guangdong 518129 (CN)
(74) Representative: Pfenning, Meinig & Partner mbB
(86) International application number: PCT/CN2022/136770
(87) International publication number: WO 2023/124815

(57) **Abstract**

Radio equipment, a resource management method, and a communication system are provided. The radio equipment in the communication system can be connected to a plurality of radio equipment controllers, and the radio equipment can obtain a carrier establishment request from one of the plurality of radio equipment controllers, and determine, based on the carrier establishment request, a physical resource used to establish a carrier. Because at least two radio equipment controllers correspond to different physical resources in the radio equipment, the radio equipment can determine, based on the physical resource determined based on the carrier establishment request and the physical resources corresponding to the radio equipment controllers in the radio equipment, whether to establish the carrier. Therefore, when the plurality of radio equipment controllers share same radio equipment, flexibility of managing the radio equipment by the radio equipment controller can be improved.

## Description

This application claims priority to Chinese Patent Application No. 202111661748.2, filed with the China National Intellectual Property Administration on December 30, 2021 and entitled "RADIO EQUIPMENT, RESOURCE MANAGEMENT METHOD, AND COMMUNICATION SYSTEM", which is incorporated herein by reference in its entirety.

### TECHNICAL FIELD

Embodiments of this application relate to the communication field, and in particular, to radio equipment, a resource management method, and a communication system.

### BACKGROUND

A shared network means that a plurality of operators use a same set of infrastructure or network resources (for example, infrastructure equipment or network resources constructed by one operator) to communicate with a terminal device, to reduce construction costs of network infrastructure.

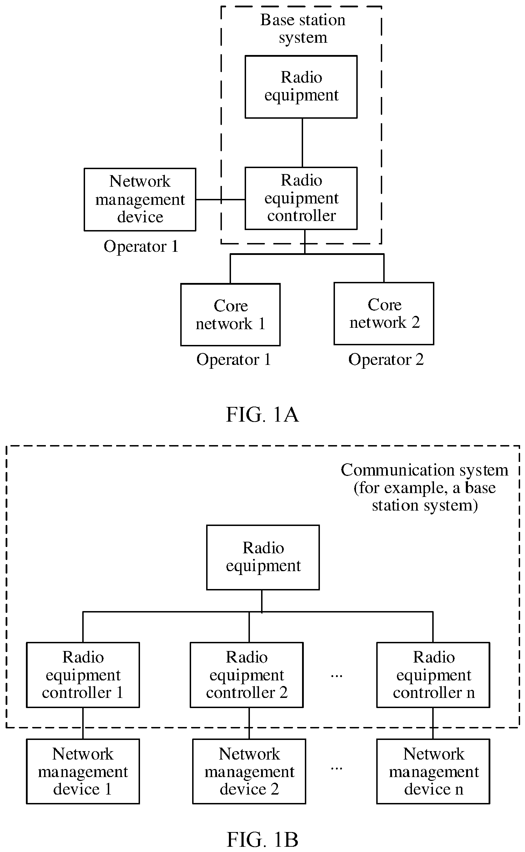

Currently, a main manner of network sharing between operators is access network sharing (radio access network sharing, RAN Sharing). Specifically, as shown in FIG. 1A, a primary operator provides a radio equipment controller and radio equipment in a base station system, and other operators are connected to the radio equipment controller in the base station system of the primary operator via respective core network devices. The other operators need to use a network management device connected to the primary operator to manage resources in shared radio equipment.

The radio equipment controller in the base station system can be managed only by the network management device of the primary operator, and the other operators do not have the right to manage the base station system. When the other operators need to perform operations such as resource application, carrier establishment, network monitoring, fault handling, and a configuration change, corresponding operations need to depend on the network management device of the primary operator. To be specific, the network management device of the primary operator sends a message to the radio equipment controller of the primary operator, and then the radio equipment controller of the primary operator sends a message to the radio equipment to apply for or manage radio resources. Therefore, an access network sharing manner in the conventional technology seriously affects processing efficiency of a series of operations such as resource application, carrier establishment, network monitoring, fault handling, and a configuration change of radio equipment controllers of the other operators.

### SUMMARY

This application provides radio equipment, a resource management method, and a communication system, so that a plurality of radio equipment controllers independently manage a physical resource in the radio equipment while sharing the physical resource in the same radio equipment.

According to a first aspect, this application provides radio equipment. The radio equipment is connected to at least two radio equipment controllers through a fronthaul interface. The radio equipment mainly includes an interface module and a processing module.

The interface module is configured to obtain a carrier establishment request from a first radio equipment controller. The first radio equipment controller is one of the at least two radio equipment controllers connected to the radio equipment. The carrier establishment request is used to request to establish a first carrier of the first radio equipment controller.

In addition, the processing module is configured to determine: first physical resource information based on the carrier establishment request, and determine, based on the first physical resource information and a physical resource corresponding to the first radio equipment controller in the radio equipment, whether to establish the first carrier. The first physical resource information indicates a physical resource required for establishing the first carrier. The at least two radio equipment controllers correspond to different physical resources in the radio equipment.

It should be noted that an interface module of radio equipment in a conventional technology is connected to only one radio equipment controller (that is, a radio equipment controller of a primary operator). Therefore, the interface module of the radio equipment in the conventional technology cannot obtain a carrier establishment request from another radio equipment controller.

In addition, in this application, the radio equipment can not only be connected to the at least two radio equipment controllers, but also learn of the physical resource corresponding to each radio equipment controller, and the at least two radio equipment controllers correspond to the different physical resources in the radio equipment. Therefore, after receiving the carrier establishment request, the radio equipment can determine, based on the physical resource corresponding to the first radio equipment controller (that is, a radio equipment controller that sends the carrier establishment request), whether resources indicated by the first physical resource information are sufficient for establishing the first carrier, without using a physical resource corresponding to other radio equipment controllers. Therefore, the plurality of radio equipment controllers can independently manage a physical resource in the radio equipment. In addition, when the plurality of radio equipment controllers share same radio equipment, flexibility of managing the radio equipment by the radio equipment controller can be improved.

In a possible implementation, the radio equipment further includes a storage module. The storage module may be coupled to the processing module, or may be independent of the processing module. The storage module is configured to store a first resource table. The first resource table includes the physical resource corresponding to each of the at least two radio equipment controllers.

For example, the radio equipment is connected to the first radio equipment controller and a second radio equipment controller. The first radio equipment controller is the one of the at least two radio equipment controllers connected to the radio equipment. The second radio equipment controller is another one of the at least two radio equipment controllers connected to the radio equipment. In this case, the first resource table stored in the storage module includes the physical resource corresponding to the first radio equipment controller and a physical resource corresponding to the second radio equipment controller. The physical resource corresponding to the first radio equipment controller includes a plurality of types of physical resources such as a frequency band resource, a power resource, a channel resource, and a carrier resource. The physical resource corresponding to the second radio equipment controller also includes a plurality of types of physical resources such as a frequency band resource, a power resource, a channel resource, and a carrier resource.

Optionally, the first resource table further includes types of physical resources that are allowed to be used by each radio equipment controller, and a resource quantity of each type of physical resource or a resource attribute of each type of physical resource.

It should be understood that the physical resource corresponding to each radio equipment controller in the first resource table may be manually pre-allocated, or may be dynamically allocated by the radio equipment. For example, the first resource table may be manually input into the storage module of the radio equipment, or the first resource table may be manually input into one of the at least two radio equipment controllers connected to the radio equipment, the radio equipment controller sends the first resource table to the radio equipment, and then the radio equipment stores the first resource table in the storage module. An implementation in which the radio equipment obtains the first resource table is not limited in this application. It should be understood that, regardless of any one of the foregoing implementations, physical resources corresponding to different radio equipment controllers are determined, and the processing module of the radio equipment may only allocate, to the first radio equipment controller for use, the physical resource corresponding to the first radio equipment controller.

In the conventional technology, because the radio equipment controller of the primary operator applies for resources from the radio equipment, the radio equipment does not sense that a physical resource applied for by the radio equipment controller of the primary operator is used to establish a carrier of which operator. Therefore, the radio equipment in the conventional technology does not have the foregoing first resource table. In this application, the first resource table that records the physical resource corresponding to each radio equipment controller is stored in the radio equipment, so that the physical resource in the radio equipment can be allocated to the at least two radio equipment controllers connected to the radio equipment, to enable the radio equipment to use the physical resource corresponding to each radio equipment controller in a carrier establishment phase, and ensure that resource allocation in the radio equipment does not conflict.

In a possible implementation, the carrier establishment request includes an identifier of the first radio equipment controller. The identifier of the first radio equipment controller indicates to apply for the physical resource corresponding to the first radio equipment controller. The processing module is further configured to query, based on the identifier of the first radio equipment controller, the physical resource corresponding to the first radio equipment controller in the first resource table.

In this implementation, it is proposed that the processing module can query, based on the identifier of the first radio equipment controller, the physical resource corresponding to the first radio equipment controller in the first resource table, to help ensure accuracy of querying, by the radio equipment, for the physical resource corresponding to the first radio equipment controller.

Optionally, if information about the physical resources corresponding to the different radio equipment controllers in the first resource table is stored in different storage positions, the processing module may query, based on the identifier of the first radio equipment controller, only a storage page of the physical resource corresponding to the first radio equipment controller, without traversing storage positions of the entire first resource table.

In a possible implementation, the processing module includes one central control module and at least two service processing modules. The at least two radio equipment controllers are in one-to-one correspondence with the at least two service processing modules.

The central control module is configured to: determine, from the at least two service processing modules based on the identifier of the first radio equipment controller in the carrier establishment request, a first service processing module corresponding to the first radio equipment controller, and transmit the carrier establishment request to the first service processing module.

The first service processing module is configured to: determine the first physical resource information based on the carrier establishment request, and transmit the first physical resource information to the central control module. Then, the central control module determines, based on the first physical resource information and the physical resource corresponding to the first radio equipment controller, whether to establish the first carrier.

In this implementation, the processing module includes two types of modules: a control-type module (that is, the central control module) and a service-type module (that is, the at least two service processing modules). Because the at least two service processing modules are independent of each other, and each service processing module corresponds to a radio equipment controller, each service processing module can independently process a message (for example, the carrier establishment request) for the corresponding radio equipment controller. In comparison with a solution in which only one service processing module processes messages from different radio equipment controllers, this solution not only helps improve service processing efficiency, but also helps implement service processing diversity in one radio equipment, and also helps implement independent update and maintenance of each service processing module. In addition, when the plurality of radio equipment controllers connected to the radio equipment belong to different operators, service processing modules (which may also be understood as service processing software) of the different operators can run in the radio equipment, to help generate, in one radio equipment based on different service processing modules, different carriers that meet requirements of the operators.

In a possible implementation, the radio equipment further includes a carrier establishment module. The central control module is specifically configured to: when a resource quantity of physical resources indicated by the first physical resource information is less than a resource quantity of physical resources corresponding to the first radio equipment controller, determine to allow establishment of the first carrier, and transmit the first physical resource information to the carrier establishment module. The carrier establishment module is configured to establish the first carrier by using the physical resource indicated by the first physical resource information.

In a possible implementation, the central control module is further configured to update, based on the resource quantity of physical resources indicated by the first physical resource information, the resource quantity of physical resources corresponding to the first radio equipment controller in the first resource table.

In a possible implementation, the central control module is specifically configured to:
when a resource quantity of physical resources indicated by the first physical resource information is greater than a resource quantity of physical resources corresponding to the first radio equipment controller, send a first notification message to the first service processing module, where the first notification message indicates that the physical resource corresponding to the first radio equipment controller is insufficient for establishing the first carrier.

The first service processing module is further configured to control the interface module to send a carrier establishment response to the first radio equipment controller. The carrier establishment response indicates that the establishment of the first carrier fails.

In a possible implementation, the carrier establishment request further includes a first carrier parameter. The first carrier parameter indicates a characteristic of the first carrier.

The first service processing module is specifically configured to generate the first physical resource information based on the first carrier parameter according to a preset rule corresponding to the first radio equipment controller. Preset rules corresponding to different radio equipment controllers in the at least two radio equipment controllers are different. The first physical resource information includes information about at least one of a frequency band resource, a power resource, a channel resource, a carrier resource, and a flow quantity resource.

In a possible implementation, the radio equipment may further query, based on a granularity of a radio equipment controller, usage information of a physical resource corresponding to the one of the at least two radio equipment controllers. The query process uses the interface module, the central control module, and the first service processing module (that is, a service processing module corresponding to a radio equipment controller that needs to be queried).

Specifically, the interface module is further configured to receive a resource query message from the first radio equipment controller. The resource query message is used to query usage information of the physical resource corresponding to the first radio equipment controller. The resource query message includes the identifier of the first radio equipment controller. Then, the central control module is further configured to transmit, based on the identifier of the first radio equipment controller, the resource query message to the first service processing module corresponding to the first radio equipment controller. Then, the first service processing module is further configured to query the usage information of the physical resource corresponding to the first radio equipment controller. Then, the interface module is further configured to send, to the first radio equipment controller, the usage information of the physical resource corresponding to the first radio equipment controller.

In this implementation, it is proposed that each service processing module may query usage information of a physical resource corresponding to a radio equipment controller, and feed back, to the radio equipment controller, the usage information of the physical resource corresponding to the radio equipment controller. This solution helps prevent the radio equipment from mistakenly reporting, to other radio equipment controllers, usage of the physical resource corresponding to the radio equipment controller, to help improve accuracy of querying, by the radio equipment, for usage information of the physical resource corresponding to each radio equipment controller.

In a possible implementation, the radio equipment may further feed back fault information based on the granularity of the radio equipment controller, in other words, feed back the fault information to some radio equipment controllers in the at least two radio equipment controllers connected to the radio equipment. The fault feedback process uses the interface module and the central control module.

The central control module is configured to obtain the fault information. The fault information indicates a faulty physical resource in the radio equipment. Then, the central control module determines at least one second radio equipment controller from the at least two radio equipment controllers. The second radio equipment controller is a radio equipment controller that uses the physical resource indicated by the fault information. Then, the interface module is controlled to send the fault information to the second radio equipment controller.

In this implementation, it is proposed that the radio equipment may further perform fault feedback based on the granularity of the radio equipment controller. Specifically, the radio equipment can determine which radio equipment controllers are affected by the faulty physical resource, and then the radio equipment feeds back the fault information only to the affected radio equipment controllers, instead of feeding back the fault information to all radio equipment controllers connected to the radio equipment.

In a possible implementation, the interface module is further configured to obtain a resource configuration message. The resource configuration message includes the first resource table.

In this implementation, because the radio equipment and the radio equipment controller are not necessarily located at a same geographical position (for example, the radio equipment is usually located on a signal tower, and the radio equipment controller is located in an equipment room of a base station), the first resource table is sent to the radio equipment via a radio equipment controller connected to the radio equipment, to help improve resource configuration efficiency, avoid manual configuration on the signal tower, and help reduce complexity of operation and maintenance management.

According to a second aspect, this application provides a first radio equipment controller. The first radio equipment controller is one of at least two radio equipment controllers connected to one radio equipment. The first radio equipment controller includes a processing module and an interface module.

The processing module is configured to generate a carrier establishment request. The carrier establishment request is used to request to establish a first carrier of the first radio equipment controller. The carrier establishment request includes an identifier of the first radio equipment controller. The identifier of the first radio equipment controller indicates to apply for a physical resource corresponding to the first radio equipment controller in the radio equipment. The at least two radio equipment controllers correspond to different physical resources in the radio equipment. The interface module is configured to send the carrier establishment request to the radio equipment.

Optionally, the identifier that is of the first radio equipment controller and that is carried in the carrier establishment request is used by the radio equipment to identify and query the physical resource corresponding to the first radio equipment controller in a first resource table.

In this embodiment, any one of a plurality of radio equipment controllers connected to the radio equipment can send the carrier establishment request to the radio equipment, to request to establish the first carrier by using the physical resource corresponding to the first radio equipment controller in the radio equipment. Therefore, the plurality of radio equipment controllers can independently manage a physical resource in the radio equipment. When the plurality of radio equipment controllers share same radio equipment, flexibility of managing the radio equipment by the radio equipment controller can be improved.

According to a third aspect, this application provides a resource management method. The resource management method is performed by radio equipment connected to at least two radio equipment controllers. In the method, the radio equipment may obtain a carrier establishment request from a first radio equipment controller. The first radio equipment controller is one of the at least two radio equipment controllers connected to the radio equipment. The carrier establishment request is used to request to establish a first carrier of the first radio equipment controller. Then, the radio equipment determines first physical resource information based on the carrier establishment request. The first physical resource information indicates a physical resource required for establishing the first carrier. Then, the radio equipment determines, based on the first physical resource information and a physical resource corresponding to the first radio equipment controller in the radio equipment, whether to establish the first carrier. The at least two radio equipment controllers correspond to different physical resources in the radio equipment.

In this application, the radio equipment can not only be connected to the at least two radio equipment controllers, but also learn of the physical resource corresponding to each radio equipment controller, and the at least two radio equipment controllers correspond to the different physical resources in the radio equipment. Therefore, after receiving the carrier establishment request, the radio equipment can determine, based on the physical resource corresponding to the first radio equipment controller (that is, a radio equipment controller that sends the carrier establishment request), whether resources indicated by the first physical resource information are sufficient for establishing the first carrier, without using a physical resource corresponding to other radio equipment controllers. Therefore, the plurality of radio equipment controllers can independently manage a physical resource in the radio equipment. When the plurality of radio equipment controllers share same radio equipment, flexibility of managing the radio equipment by the radio equipment controller can be improved.

In a possible implementation, the radio equipment stores a first resource table. The first resource table includes the physical resource corresponding to each of the at least two radio equipment controllers.

Optionally, the first resource table further includes types of physical resources that are allowed to be used by each radio equipment controller, and a resource quantity of each type of physical resource or a resource attribute of each type of physical resource.

It should be understood that the physical resource corresponding to each radio equipment controller in the first resource table may be manually pre-allocated, or may be dynamically allocated by the radio equipment. For example, the first resource table may be manually input into a storage module of the radio equipment, or the first resource table may be manually input into one of the at least two radio equipment controllers connected to the radio equipment, the radio equipment controller sends the first resource table to the radio equipment, and then the radio equipment stores the first resource table in the storage module. An implementation in which the radio equipment obtains the first resource table is not limited in this application. It should be understood that, regardless of any one of the foregoing implementations, physical resources corresponding to different radio equipment controllers are determined, and a processing module of the radio equipment may only allocate, to the first radio equipment controller for use, the physical resource corresponding to the first radio equipment controller.

In a conventional technology, because a radio equipment controller of a primary operator applies for resources from the radio equipment, the radio equipment does not sense that a physical resource applied for by the radio equipment controller of the primary operator is used to establish a carrier of which operator. Therefore, the radio equipment in the conventional technology does not have the foregoing first resource table. In this application, the first resource table that records the physical resource corresponding to each radio equipment controller is stored in the radio equipment, so that the physical resource in the radio equipment can be allocated to the at least two radio equipment controllers connected to the radio equipment, to enable the radio equipment to use the physical resource corresponding to each radio equipment controller in a carrier establishment phase, and ensure that resource allocation in the radio equipment does not conflict.

In a possible implementation, the carrier establishment request includes an identifier of the first radio equipment controller. The identifier of the first radio equipment controller indicates to apply for the physical resource corresponding to the first radio equipment controller.

Before the radio equipment determines, based on the first physical resource information and a physical resource corresponding to the first radio equipment controller in the radio equipment, whether to establish the first carrier, the method further includes:
The radio equipment queries, based on the identifier of the first radio equipment controller, the physical resource corresponding to the first radio equipment controller in the first resource table.

In this implementation, it is proposed that the radio equipment can query, based on the identifier of the first radio equipment controller, the physical resource corresponding to the first radio equipment controller in the first resource table, to help ensure accuracy of querying, by the radio equipment, the physical resource corresponding to the first radio equipment controller.

In a possible implementation, that the radio equipment determines, based on the first physical resource information and a physical resource corresponding to the first radio equipment controller in the radio equipment, whether to establish the first carrier includes:
When a resource quantity of physical resources indicated by the first physical resource information is less than a resource quantity of physical resources corresponding to the first radio equipment controller, the radio equipment establishes the first carrier by using the physical resource indicated by the first physical resource information.

In a possible implementation, the method further includes:
The radio equipment updates, based on the resource quantity of the physical resource indicated by the first physical resource information, the resource quantity of physical resources corresponding to the first radio equipment controller in the first resource table.

In a possible implementation, the carrier establishment request further includes a first carrier parameter. The first carrier parameter indicates a characteristic of the first carrier.

That the radio equipment determines first physical resource information based on the carrier establishment request includes:
The radio equipment generates the first physical resource information based on the first carrier parameter according to a preset rule corresponding to the first radio equipment controller. Preset rules corresponding to different radio equipment controllers in the at least two radio equipment controllers are different. The first physical resource information includes information about at least one of a frequency band resource, a power resource, a channel resource, a carrier resource, and a flow quantity resource.

In a possible implementation, after the radio equipment establishes the first carrier by using the physical resource indicated by the first physical resource information, the method further includes:
The radio equipment receives a resource query message from the first radio equipment controller. The resource query message is used to query usage information of the physical resource corresponding to the first radio equipment of the radio equipment. The resource query message includes the identifier of the first radio equipment controller.

The radio equipment queries the usage information of the physical resource corresponding to the first radio equipment controller in the first resource table.

The radio equipment sends, to the first radio equipment controller, the usage information of the physical resource corresponding to the first radio equipment controller.

In this implementation, it is proposed that the radio equipment may further query, based on a granularity of a radio equipment controller, usage information of a physical resource corresponding to the one of the at least two radio equipment controllers, and feed back, to the radio equipment controller, the usage information of the physical resource corresponding to the radio equipment controller. This solution helps prevent the radio equipment from mistakenly reporting, to other radio equipment controllers, usage of the physical resource corresponding to the radio equipment controller, to help improve accuracy of querying, by the radio equipment, usage information of the physical resource corresponding to each radio equipment controller.

In a possible implementation, the method further includes:
The radio equipment obtains fault information. The fault information indicates at least one type of faulty physical resource in the radio equipment.
The radio equipment determines at least one second radio equipment controller from the at least two radio equipment controllers. The second radio equipment controller is a radio equipment controller that uses the physical resource indicated by the fault information.
The radio equipment sends the fault information to the second radio equipment controller.

In this implementation, it is proposed that the radio equipment may further perform fault feedback based on the granularity of the radio equipment controller. Specifically, the radio equipment can determine which radio equipment controllers are affected by the faulty physical resource, and then the radio equipment feeds back the fault information only to the affected radio equipment controllers, instead of feeding back the fault information to all radio equipment controllers connected to the radio equipment.

In a possible implementation, before the radio equipment receives the carrier establishment request from the first radio equipment controller, the method further includes:
The radio equipment obtains a resource configuration message. The resource configuration message includes the first resource table. The radio equipment parses the resource configuration message, and stores the resource configuration message in the storage module.

For example, the radio equipment receives the resource configuration message from the one of the at least two radio equipment controllers connected to the radio equipment. The resource configuration message includes the first resource table.

It should be noted that there are a plurality of other implementations in this aspect. For details, refer to the implementations and beneficial effects of the first aspect. Details are not described herein again.

According to a fourth aspect, an embodiment of this application provides a communication apparatus. The communication apparatus may be the radio equipment in the foregoing implementations, or may be a chip or a functional module in the radio equipment. The communication apparatus may include a processing module and a transceiver module. When the communication apparatus is the radio equipment, the processing module may be a processor, and the transceiver module may be a transceiver. The radio equipment may further include a storage module. The storage module may be a memory. The storage module is configured to store instructions. The processing module executes the instructions stored in the storage module, to enable the radio equipment to perform the method according to any one of the third aspect or the implementations of the third aspect. When the communication apparatus is the chip in the radio equipment, the processing module may be a processor, and the transceiver module may be an input/output interface, a pin, a circuit, or the like. The processing module executes instructions stored in a storage module, to enable the radio equipment to perform the method according to any one of the third aspect or the implementations of the third aspect. The storage module may be a storage module (for example, a register or a cache) in the chip, or may be a storage module (for example, a read-only memory or a random access memory) that is in the radio equipment and that is located outside the chip.

According to a fifth aspect, an embodiment of this application provides a communication apparatus. The communication apparatus may be the radio equipment controller in the foregoing implementations, or may be a chip or a functional module in the radio equipment controller. The communication apparatus may include a processing module and a transceiver module. When the communication apparatus is the radio equipment controller, the processing module may be a processor, and the transceiver module may be a transceiver. The radio equipment controller may further include a storage module. The storage module may be a memory. The storage module is configured to store instructions. The processing module executes the instructions stored in the storage module, to enable the radio equipment controller to perform the functions described in the second aspect. When the communication apparatus is the chip in the radio equipment controller, the processing module may be a processor, and the transceiver module may be an input/output interface, a pin, a circuit, or the like. The processing module executes instructions stored in the storage module, to enable the radio equipment controller to perform the functions described in the second aspect. The storage module may be a storage module (for example, a register or a cache) in the chip, or may be a storage module (for example, a read-only memory or a random access memory) that is in the radio equipment controller and that is located outside the chip.

According to a sixth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the third aspect or the implementations of the third aspect and the foregoing aspects.

According to a seventh aspect, an embodiment of this application provides a computer program product including instructions. When the instructions are run on a computer, the computer is enabled to perform the method according to any one of the third aspect or the implementations of the third aspect.

According to an eighth aspect, an embodiment of this application provides a computer-readable storage medium, including instructions. When the instructions are run on a computer, the computer is enabled to perform the method according to any one of the third aspect or the implementations of the third aspect.

According to a ninth aspect, an embodiment of this application provides a communication system. The communication system includes the radio equipment according to any one of the first aspect or the implementations of the first aspect, and the radio equipment controller according to any one of the second aspect or the implementations of the second aspect. For example, the communication system may be a base station system.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application.
FIG. 1A is an example diagram of a composition structure of a base station system;
FIG. 1B is an example diagram of a composition structure of a communication system according to this application;
FIG. 2A is a schematic diagram of an embodiment of an internal structure of radio equipment according to this application;
FIG. 2B is a schematic diagram of another embodiment of an internal structure of radio equipment according to this application;
FIG. 3 is a schematic diagram of an embodiment of a communication apparatus according to this application;
FIG. 4 is a schematic diagram of another embodiment of a communication apparatus according to this application;
FIG. 5 is a schematic diagram of an embodiment of an internal structure of a radio equipment controller according to this application; and
FIG. 6 is a flowchart of a resource management method according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the terms used in such a way are interchangeable in proper circumstances, so that the embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this application, to enable a plurality of radio equipment controllers to share a physical resource in same radio equipment, a communication system shown in FIG. 1B is provided. The communication system may be a base station system including one radio equipment and at least two radio equipment controllers. Each radio equipment controller can be connected to a network management device, and a user can manage, via the network management device, the radio equipment controller connected to the network management device, to apply for use of the physical resource in the radio equipment via the radio equipment controller.

The radio equipment controller may be a network element or a device having a baseband signal processing function, or a device having a radio signal processing function for managing an access network (radio access network, RAN). The radio equipment controller can complete baseband signal processing functions such as coding, multiplexing, modulation, and spreading, complete a function of processing signaling from the radio equipment, implement a function of performing local management and remote operation and maintenance on the radio equipment, and provide a function of clock synchronization for a transmission device or the radio equipment. For example, the radio equipment controller may be a baseband processing unit (baseband unit, BBU) (which is also referred to as a building baseband unit (building baseband unit, BBU)) in an access network device (for example, a base station). For example, in a long term evolution (long term evolution advanced, LTE) system or a long term evolution advanced (long term evolution advanced, LTE-A) system, the radio equipment controller may be a baseband processing unit BBU in an evolved NodeB (evolved NodeB, eNB or e-NodeB). For another example, in a 5G NR system, the radio equipment controller may be a baseband processing unit BBU in a next generation NodeB (next generation NodeB, gNB). For example, in a 5th generation mobile information technology (5th generation mobile communication technology, 5G) new radio (new radio, NR) system, the radio equipment controller may alternatively be a distributed unit (distributed unit, DU) in a cloud radio access network (cloud radio access network, Cloud RAN) or an open radio access network (open radio access network, ORAN) system, or a central unit (central unit, CU) (which is also referred to as a control unit), or may be a combination structure of a central unit CU and a distributed unit DU. In actual application and subsequent network evolution, the radio equipment controller may alternatively be another device or apparatus having a baseband signal processing function, or another device or apparatus having a radio signal processing function for managing the access network RAN.

In addition, the radio equipment described above may be a radio unit (radio unit, RU) (which is also referred to as a radio frequency unit) in an access network RAN device (for example, a base station), or may be another processing apparatus having a function of processing a radio signal (for example, an intermediate frequency signal or a radio frequency signal). For example, the radio equipment may be a remote radio unit (remote radio unit, RRU) (which is also referred to as a remote radio module) or a remote radio head (remote radio head, RRH) in the base station. The RRU is generally used for conventional outdoor coverage of a macro base station. The RRH is generally used for indoor coverage of an indoor distributed system. For example, the radio equipment may alternatively be an active antenna unit (active antenna unit, AAU), that is, a processing unit that integrates an RRU (or an RRH) and an antenna. In actual application and subsequent network evolution, the radio equipment may alternatively be another device or apparatus having a function of receiving and sending a radio frequency signal, and processing the radio frequency signal or an intermediate frequency signal.

Optionally, for example, some physical layer functions of the baseband unit may be implemented by the radio frequency unit. In this case, the radio equipment may have the some physical layer functions of the BBU, for example, functions such as modulation, demodulation, layer mapping, fast Fourier transform (fast Fourier transform, FFT), and channel estimation/equalization.

Optionally, the radio equipment and the radio equipment controller may be directly connected by using a transmission medium (for example, the transmission medium such as an optical fiber or a cable), or may be connected by using a fronthaul network (fronthaul transport network, FTN) including one or more transmission devices. The fronthaul network includes but is not limited to a fronthaul network in the LTE system, a fronthaul network in 5G NR, a fronthaul network in a 6th generation mobile information technology (6th generation mobile communication technology, 6G) system, and even a fronthaul network in subsequent evolved standards. The transmission device is a network device configured to transmit data in the fronthaul network. For example, the transmission device may be a network device that can implement packet processing and data transmission, such as a packet transport network (packet transport network, PTN) device, a router, a switch, a microwave device, and an optical transport network (optical transport network, OTN) device. In addition, the transmission device may be a network device that integrates functions of the foregoing one or more devices. This is not specifically limited herein.

In addition, the radio equipment and the radio equipment controller in the communication system provided in this application are connected through a fronthaul interface. The fronthaul interface may be an interface defined in a conventional technology for dividing physical layers via the communication system, for example, an enhanced common public radio interface (enhanced common public radio interface, eCPRI), a common public radio interface (common public radio interface, CPRI), an open base station architecture (open base station architecture initiative, OBASI), or another interface that can connect the radio equipment and the radio equipment controller.

It should be further understood that, when communication protocols used between the radio equipment controller and the radio equipment are different, in other words, fronthaul interfaces used between the radio equipment controller and the radio equipment are different, the radio equipment controller may have different names, and the radio equipment may also have different names. For example, in a common public radio interface (common public radio interface, CPRI) protocol, the radio equipment controller is referred to as a radio equipment controller (radio equipment controller, REC), and the radio equipment is referred to as radio equipment (radio equipment, RE). In an enhanced common public radio interface (enhanced common public radio interface, eCPRI) protocol, the radio equipment controller is referred to as an eCPRI radio equipment controller (eCPRI radio equipment controller, eREC), and the radio equipment is referred to as eCPRIradio equipment (eCPRI radio equipment, eRE). It should be understood that, in other protocols that provide communication for the baseband unit and the radio frequency unit, the radio equipment controller may also have other names. Specifically, a specific implementation form and a specific name of the radio equipment controller are not limited in this application, and the name "radio equipment controller" is used for description below. Similarly, in other protocols that provide communication for the baseband unit and the radio frequency unit, the radio equipment may also have other names. Specifically, a specific implementation form and a specific name of the radio equipment are not limited in this application, and the name "radio equipment" is used for description below.

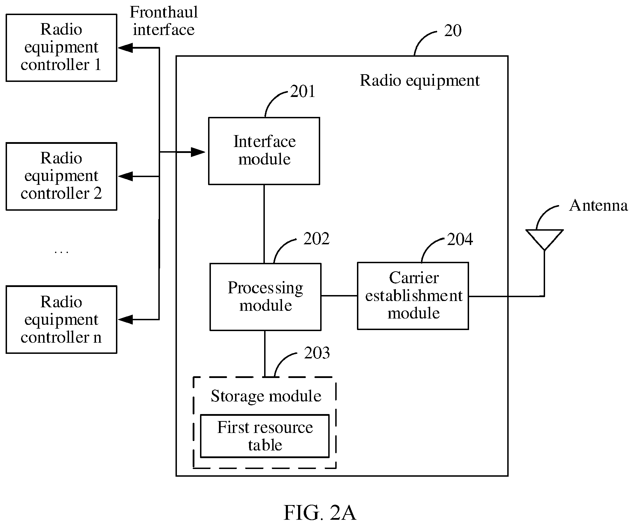

The following describes an internal structure of the radio equipment with reference to FIG. 2A. FIG. 2A shows an implementation of radio equipment 20 according to this application. The radio equipment 20 includes an interface module 201 and a processing module 202. Optionally, the radio equipment 20 further includes a storage module 203 and a carrier establishment module 204.

The interface module 201 is configured to obtain a carrier establishment request from a first radio equipment controller. The first radio equipment controller is one of at least two radio equipment controllers connected to the radio equipment. For example, in FIG. 2A, the radio equipment 20 is connected to n radio equipment controllers including a radio equipment controller 1 and a radio equipment controller 2, where n is an integer greater than 1. In this case, the first radio equipment controller is one of the n radio equipment controllers in FIG. 2A.

Optionally, the at least two radio equipment controllers may be radio equipment controllers belonging to different operators. For example, the radio equipment controller 1 belongs to an operator 1, and the radio equipment controller 2 belongs to an operator 2, where the operator 1 and the operator 2 are different operators. Generally, when two radio equipment controllers belong to different operators, the two radio equipment controllers have different management logic, and can use different physical resources in the radio equipment.

In addition, the carrier establishment request is used to request to establish a first carrier of the first radio equipment controller. It may also be understood as that the carrier establishment request is used to apply to the radio equipment for using some physical resources, so that the radio equipment uses the physical resource to establish the first carrier for the first radio equipment controller. Certainly, the carrier establishment request carries some information required for establishing the first carrier, and details are described below.

In addition, the processing module 202 is configured to: determine first physical resource information based on the carrier establishment request, and determine, based on the first physical resource information and a physical resource corresponding to the first radio equipment controller in the radio equipment, whether to establish the first carrier.

The first physical resource information is determined by the processing module 202 based on content carried in the carrier establishment request, and the first physical resource information indicates a physical resource required for establishing the first carrier. It should be understood that the first physical resource information may indicate one type of physical resource, or may indicate a plurality of types of physical resources. The physical resource includes but is not limited to a frequency band resource, a power resource, a channel resource, a carrier resource, and a flow quantity resource. Therefore, the first physical resource information includes information about at least one of the frequency band resource, the power resource, the channel resource, the carrier resource, and the flow quantity resource.

The frequency band resource refers to a frequency band or a frequency domain range used when a carrier is established. Generally, the frequency band resource is a resource related to an operator. Each operator has a fixed frequency band, and different operators are allowed to use different frequency bands. For example, the frequency band resource is a licensed (licensed) frequency band of the operator, and the different operators have different licensed (licensed) frequency bands. A radio equipment controller is allowed to use only a frequency band of an operator to which the radio equipment controller belongs. For example, if 1.8 GHz (1890 MHz to 1895 MHz) belongs to the operator 1, the radio equipment controller of the operator 2 cannot use a frequency band resource of 1.8 GHz (1890 MHz to 1895 MHz), and only the radio equipment controller of the operator 1 can apply for using the frequency band resource of 1.8 GHz (1890 MHz to 1895 MHz). In addition, the frequency band resource includes a transmit frequency and a receive frequency. Generally, in a frequency division duplex (frequency division duplex, FDD) mode, the transmit frequency is different from the receive frequency. For example, in 1.8 GHz, 1765 MHz to 1785 MHz may be set as transmit frequencies (which may also be referred to as uplink frequencies), and 1860 MHz to 1880 MHz may be set as receive frequencies (which may also be referred to as downlink frequencies). For another example, in 2.1 GHz, 1920 MHz to 1960 MHz may be set as transmit frequencies, and 2110 MHz to 2150 MHz may be set as receive frequencies. Generally, in a time division duplex (time division duplex, TDD) mode, the transmit frequency may be the same as the receive frequency. For example, in 3.5 GHz, 3580 MHz to 3600 MHz may be set as transmit frequencies and a receive frequency band.

It should be understood that whether to use the FDD mode or the TDD mode for the frequency band resource is related to the carrier that needs to be established by the radio equipment controller. A duplex mode of the frequency band resource is not limited in this application.

In addition, the power resource refers to a multiple of power of the established carrier that is amplified by a power amplifier. Generally, power resources that can be used by carriers using different frequency band resources are independent. It should be understood that the power resource is at a frequency band level, and the radio equipment shares the power resource with all carriers in a same frequency band. For example, all carriers in 1.8 GHz share a 20 W power resource, and all carriers in 2.1 GHz share a 40 W power resource. Therefore, if a carrier in one of the frequency bands occupies a large quantity of power resources (for example, transmit power is high), other carriers in the frequency band can occupy a small quantity of power resources (for example, transmit power is low). It should be understood that higher transmit power of the carrier indicates a longer transmission distance of the carrier and a wider range of services that can be provided by the carrier. However, higher transmit power may not be an optimal choice. Because transmit power of a terminal device is fixed, if a transmission distance is extremely long, the terminal device may receive only a signal from the radio equipment, but the radio equipment cannot receive a signal sent by the terminal device. Generally, the operator evenly allocates power based on a spectrum bandwidth to ensure same coverage. For example, if power of 2.1 GHz is 20 W, there are two carriers in 2.1 GHz, and bandwidths of the two carriers are 20 M and 5 M respectively, a power resource occupied by the 20 M carrier is 16 W, and a power resource occupied by the 5 M carrier is 4 W.

In addition, a quantity of channel resources refers to a quantity of occupied radio frequency link channels. Generally, the channel resource is related to a frequency band. For example, if in the radio equipment, a quantity of channel resources in a 2.1 GHz frequency band is 2T, and a quantity of channel resources in a 1.8 GHz frequency band is 3T, it indicates that the radio equipment can use a maximum of two channels when establishing a carrier in the 2.1 GHz frequency band, and can use a maximum of three channels when establishing a carrier in the 1.8 GHz frequency band. In some possible implementations, the channel resource can further indicate an identifier or a number of an occupied channel, that is, indicate which channels are occupied. For example, if in the radio equipment, quantities of channel resources in a 2.1 GHz frequency band are T1 and T2, it indicates that the radio equipment can use two channels numbered "T1" and "T2" when establishing a carrier in the 2.1 GHz frequency band.

It should be noted that, because transmit devices of channels in the radio equipment are independent, power of the channels in the radio equipment are also independent of each other. If a channel is shared by a plurality of radio equipment controllers, power of the channel also needs to be shared by the plurality of radio equipment controllers. Therefore, in actual application, sharing is generally considered by combining the channel resource and the power resource. In a possible implementation, the channel resource and the power resource are combined into a channel power resource. For example, on a channel A, power allocated to 1.8 GHz is 20 W, and power allocated to 2.1 GHz is 40 W.

In addition, a quantity of carrier resources refers to a quantity of carriers that can be processed by the radio equipment. The carrier resource is mainly an intermediate frequency digital resource, and is used to perform processing such as frequency conversion/clipping/predistortion on each carrier. For example, a maximum quantity of carrier resources of the radio equipment is 4 (in other words, the radio equipment can process a maximum of four carriers). It is assumed that frequency band resources corresponding to a radio equipment controller are 2.1 GHz (2130 MHz to 2150 MHz) 20 M and 1.8 GHz (1830 MHz to 1850 MHz) 20 M. If the radio equipment controller chooses to establish one 2.1 GHz 20 M carrier and one 1.8 GHz 20 M carrier, a quantity of carrier resources that need to be consumed by the radio equipment is 2. If the radio equipment controller chooses to establish two 2.1 GHz 10 M carriers and two 1.8 GHz 10 M carriers, a quantity of carrier resources that need to be consumed by the radio equipment is 4. When the plurality of radio equipment controllers share carrier resources, the more carrier resources a radio equipment controller uses, the fewer carrier resources are available for other radio equipment controllers, and even the other radio equipment controllers cannot establish carriers successfully due to a lack of carrier resources when there are spectrum/power resources.

In addition, a quantity of flow quantity resources refers to a quantity of service flows that are of a terminal user and that can be processed by the radio equipment at a same moment. The flow quantity resource includes an uplink flow quantity resource and a downlink flow quantity resource. A quantity of uplink flow quantity resources refers to a quantity of uplink service flows that are of the terminal user and that can be processed by the radio equipment at a same moment. A quantity of downlink flow quantity resources refers to a quantity of downlink service flows that are of the terminal user and that can be processed by the radio equipment at a same moment.

It should be understood that the flow quantity resource is a type of a baseband processing resource. When the radio equipment has a baseband processing function, for example, the radio equipment controller is an AAU, the radio equipment can share the flow quantity resource with the plurality of radio equipment controllers. Generally, more flow quantity resources allocated to the radio equipment controller indicate that the radio equipment can process data of more terminal users for the radio equipment controller, and therefore better communication experience can be provided for the user.

It should be understood that the physical resource is merely an example listed for ease of understanding by a reader. In actual application, the radio equipment may further provide other types of physical resources for the at least two radio equipment controllers. This application does not limit a specific physical resource provided by the radio equipment.

Specifically, the first physical resource information may not only indicate a type of the physical resource required for establishing the first carrier, but also indicate a resource quantity of each type of physical resource. For example, the first physical resource information may not only indicate that the channel resource is required for establishing the first carrier, but also clearly indicate that channel resources of two channels are required for establishing the first carrier, in other words, a resource quantity of the channel resources includes the channels resources of the two channels. For another example, the first physical resource information may not only indicate that the power resource is required for establishing the first carrier, but also clearly indicate that the power resource required for establishing the first carrier is 20 W, in other words, transmit power of the first carrier is 20 W. For another example, when the channel resource and the power resource are combined into the channel power resource, the first physical resource information may indicate that the channel power resource required for establishing the first carrier is 20 W of the channel A. To be specific, the first carrier uses the channel A, and transmit power of the first carrier is 20 W.

It should be understood that the first physical resource information may not only indicate the type of the physical resource required for establishing the first carrier, and the resource quantity of each type of physical resource, but also indicate an attribute of each type of physical resource. For example, the first physical resource information may indicate that a physical resource whose type is a frequency band resource is required for establishing the first carrier, a resource quantity of the frequency band resource is 5 MHz, and an attribute of the frequency band resource is 1.8 GHz (1890 MHz to 1895 MHz). For another example, the first physical resource information may indicate that a physical resource whose type is a channel resource is required for establishing the first carrier, the resource quantity of the frequency band resources includes the channel resources of the two channels, and an attribute of the frequency band resource is a radio frequency channel whose channel number is T1 and a radio frequency channel whose channel number is T2.

It should be understood that different radio equipment controllers can use different physical resources located in the radio equipment, in other words, the physical resources in the radio equipment 20 are allocated to the at least two radio equipment controllers, and the at least two radio equipment controllers correspond to the different physical resources in the radio equipment 20. In other words, information such as radio equipment controllers to which the physical resources in the radio equipment 20 are allocated and physical resources that are allowed to be used by each radio equipment controller is determined. Therefore, when the processing module 202 learns of, based on the first physical resource information, physical resources that need to be used when the first radio equipment controller applies for establishing the first carrier, the processing module 202 needs to determine a relationship between the physical resource indicated by the first physical resource information and the physical resource corresponding to the first radio equipment controller in the radio equipment, to determine whether to establish the first carri er.

Specifically, the processing module 202 needs to determine whether the physical resource indicated by the first physical resource information belongs to the physical resource corresponding to the first radio equipment controller. If the physical resource indicated by the first physical resource information belongs to the physical resource corresponding to the first radio equipment controller, the processing module 202 determines to allow establishment of the first carrier. If the physical resource indicated by the first physical resource information does not belong to the physical resource corresponding to the first radio equipment controller, the processing module 202 determines not to allow the establishment of the first carrier.

It may also be understood as that the processing module 202 determines, based on a relationship between a resource quantity of physical resources indicated by the first physical resource information and a resource quantity of physical resources corresponding to the first radio equipment controller, whether to allow the establishment of the first carrier. For example, if the resource quantity of physical resources indicated by the first physical resource information is less than the resource quantity of physical resources corresponding to the first radio equipment controller, the processing module 202 determines to allow the establishment of the first carrier. Then, the processing module 202 transmits the first physical resource information to the carrier establishment module 204, and the carrier establishment module 204 establishes the first carrier by using the physical resource indicated by the first physical resource information. If the resource quantity of physical resources indicated by the first physical resource information is greater than resource quantity of the physical resources corresponding to the first radio equipment controller, the processing module 202 determines not to allow the establishment of the first carrier, and controls the interface module 201 to send a carrier establishment response to the first radio equipment controller. The carrier establishment response indicates that the establishment of the first carrier fails.

In this embodiment, the radio equipment 20 can be connected to the plurality of radio equipment controllers, and the radio equipment 20 can obtain the carrier establishment request from one of the plurality of radio equipment controllers, determine, based on the carrier establishment request, the physical resource used to establish the carrier, and then determine, based on the physical resource and the physical resource corresponding to the radio equipment controller in the radio equipment, whether to establish the carrier. Therefore, the plurality of radio equipment controllers can share same radio equipment, so that flexibility of managing the radio equipment by the radio equipment controller can be improved.

The radio equipment 20 further includes the storage module 203. The storage module 203 may be coupled to the processing module 202, or may be independent of the processing module 202. The storage module 203 is configured to store a first resource table. The first resource table includes the physical resource corresponding to each of the at least two radio equipment controllers connected to the radio equipment 20.

Optionally, the first resource table further includes types of physical resources that are allowed to be used by each radio equipment controller, and a resource quantity of each type of physical resource or a resource attribute of each type of physical resource.

For ease of understanding, for example, the radio equipment 20 is connected to the radio equipment controller 1 and the radio equipment controller 2. In this case, the first resource table stored in the storage module 203 of the radio equipment 20 includes a physical resource corresponding to the radio equipment controller 1 and a physical resource corresponding to the radio equipment controller 2. The physical resource corresponding to the radio equipment controller 1 includes a plurality of types of physical resources such as a frequency band resource, a power resource, a channel resource, and a carrier resource. The physical resource corresponding to the radio equipment controller 2 also includes a plurality of types of physical resources such as a frequency band resource, a power resource, a channel resource, and a carrier resource. In this case, the first resource table in the radio equipment 20 may be shown in the following Table 1-1.

**Table 1-1**

| | Identifier of the radio equipment controller 1 | Identifier of the radio equipment controller 2 |
|---|---|---|
| Frequency band resource | 1.8 GHz (1765 MHz to 1785 MHz/1860 MHz to 1880 MHz) | 1.8 GHz (1745 MHz to 1765 MHz/1840 MHz to 1860 MHz) |
| | 2.1 GHz (1920 MHz to 1960 MHz/2110 MHz to 2150 MHz) | |
| Power resource | 1.8 GHz 20 W | 1.8 GHz 20 W |
| | 2.1 GHz 40 W | |
| Channel resource | 1.8 GHz 2T (T1 and T2) | 1.8 GHz 2T (T5 and T6) |
| | 2.1 GHz 2T (T3 and T4) | |
| Carrier resource | 4 | 2 |
| Uplink flow quantity resource | Six flows | Two flows |
| Downlink flow quantity resource | Eight flows | Eight flows |

In the example shown in Table 1-1, the radio equipment 20 allocates the physical resources to the radio equipment controller 1 and the radio equipment controller 2. The radio equipment controller 1 and the radio equipment controller 2 correspond to different physical resources. It can be learned from the carrier resource in Table 1-1 that the radio equipment allows the radio equipment controller 1 to establish a maximum of four carriers and allows the radio equipment controller 2 to establish a maximum of two carriers. For the radio equipment controller 1, the radio equipment processes a maximum of six uplink service flows and eight downlink service flows, and processes a maximum of two uplink service flows and eight downlink service flows.

For example, the radio equipment controller 1 is allowed to use frequency band resources of four frequency bands: a transmit frequency band "1.8 GHz (1765 MHz to 1785 MHz)", a receive frequency band "1.8 GHz (1860 MHz to 1880 MHz)", a transmit frequency band "2.1 GHz (1920 MHz to 1960 MHz)", and a receive frequency band "2.1 GHz (2110 MHz to 2150 MHz)". The radio equipment controller 2 is allowed to use frequency band resources of two frequency bands: a transmit frequency band "1.8 GHz (1745 MHz to 1765 MHz)" and a receive frequency band "1.8 GHz (1840 MHz to 1860 MHz)".

For another example, if the radio equipment controller 1 uses a 2.1 GHz frequency band to generate a carrier, the radio equipment 20 allows the radio equipment controller 1 to use power of 40 W. If the radio equipment controller 1 uses a 1.8 GHz frequency band to generate a carrier, the radio equipment 20 allows the radio equipment controller 1 to use power of 20 W.

For another example, if the radio equipment controller 1 uses a 2.1 GHz frequency band to generate a carrier, the radio equipment 20 allows the radio equipment controller 1 to use channel resources of a total of two channels: a channel 1 (namely, a channel whose identifier is "T1" in Table 1-1) and a channel 2 (namely, a channel whose identifier is "T2" in Table 1-1). If the radio equipment controller 1 uses a 1.8 GHz frequency band to generate a carrier, the radio equipment 20 allows the radio equipment controller 1 to use channel resources of another two channels: a channel 5 (namely, a channel whose identifier is "T5" in Table 1-1) and a channel 6 (namely, a channel whose identifier is "T6" in Table 1-1).

In another possible example, if the power resource and the channel resource are combined, the physical resource corresponding to the radio equipment controller 1 includes a plurality of types of physical resources such as a frequency band resource, a channel power resource, and a carrier resource, and the physical resource corresponding to the radio equipment controller 2 also includes a plurality of types of physical resources such as a frequency band resource, a channel power resource, and a carrier resource. In this case, the first resource table in the radio equipment 20 may be shown in the following Table 1-2.

**Table 1-2**

| | Identifier of the radio equipment controller 1 | Identifier of the radio equipment controller 2 |
|---|---|---|
| Frequency band resource | 1.8 GHz (1765 MHz to 1785 MHz/1860 MHz to 1880 MHz) | 1.8 GHz (1745 MHz to 1765 MHz/1840 MHz to 1860 MHz) |
| | 2.1 GHz (1920 MHz to 1960 MHz/2110 MHz to 2150 MHz) | |
| Channel power resource | 1.8 GHz channel A20 W | 1.8 GHz channel A 20 W |
| | 1.8 GHz channel B 20 W | |
| | 2.1 GHz channel A 40 W | 1.8 GHz channel B 20 W |
| | 2.1 GHz channel B 40 W | |
| Carrier resource | 4 | 2 |
| Uplink flow quantity resource | Six flows | Two flows |
| Downlink flow quantity resource | Eight flows | Eight flows |

In the example shown in Table 1-2, the radio equipment 20 allocates the physical resources to the radio equipment controller 1 and the radio equipment controller 2. The radio equipment controller 1 and the radio equipment controller 2 correspond to different physical resources. For example, if the radio equipment controller 1 uses a 2.1 GHz frequency band to generate a carrier, the radio equipment 20 allows the radio equipment controller 1 to use a total of two channels: the channel A and the channel B, where maximum power of the channel A and maximum power of the channel B both are 40 W. If the radio equipment controller 1 uses a 1.8 GHz frequency band to generate a carrier, the radio equipment 20 allows the radio equipment controller 1 to use a total of two channels: the channel A and the channel B, where maximum power of the channel A and maximum power of the channel B both are 20 W. In addition, for explanations of other physical resources in Table 1-2, refer to the related descriptions corresponding to Table 1-1. Details are not described herein.

It should be understood that the example shown in Table 1-1 and the example shown in Table 1-2 are merely two possible examples of the first resource table in the FDD mode provided in this application. In actual application, the TDD mode may alternatively be used for the frequency band resource in the first resource table. Therefore, there may be another example of the first resource table. Specific examples are not listed one by one in this application.

It should be understood that the physical resource corresponding to each radio equipment controller in the first resource table may be manually pre-allocated, or may be dynamically allocated by the radio equipment 20. For example, the first resource table may be manually input into the storage module 203 of the radio equipment 20, or the first resource table may be manually input into one of the at least two radio equipment controllers connected to the radio equipment 20, the radio equipment controller sends the first resource table to the radio equipment 20, and then the radio equipment 20 stores the first resource table in the storage module 203. An implementation in which the radio equipment 20 obtains the first resource table is not limited in this application. It should be understood that, regardless of any one of the foregoing implementations, physical resources corresponding to different radio equipment controllers are determined, and the processing module 202 of the radio equipment 20 may only allocate, to the first radio equipment controller for use, the physical resource corresponding to the first radio equipment controller.

In a conventional technology, because a radio equipment controller of a primary operator applies for resources from the radio equipment, the radio equipment does not sense that a physical resource applied for by the radio equipment controller of the primary operator is used to establish a carrier of which operator. Therefore, the radio equipment in the conventional technology does not have the foregoing first resource table. In this application, the first resource table that records the physical resource corresponding to each radio equipment controller is stored in the radio equipment 20, so that the physical resource in the radio equipment 20 can be allocated to the at least two radio equipment controllers connected to the radio equipment 20, to enable the radio equipment 20 to use the physical resource corresponding to each radio equipment controller in a carrier establishment phase, and ensure that resource allocation in the radio equipment 20 does not conflict.

In a possible implementation, the carrier establishment request includes an identifier of the first radio equipment controller. The identifier of the first radio equipment controller indicates to apply for the physical resource corresponding to the first radio equipment controller. Because the processing module 202 can learn of a storage position of the first resource table, the processing module 202 is further configured to query, based on the identifier of the first radio equipment controller, the physical resource corresponding to the first radio equipment controller in the first resource table.

Optionally, if information about the physical resources corresponding to the different radio equipment controllers in the first resource table is stored in different storage positions, the processing module 202 may query, based on the identifier of the first radio equipment controller, only a storage page of the physical resource corresponding to the first radio equipment controller, without traversing storage positions of the entire first resource table.

Optionally, the processing module 202 may further perform validity check on the carrier establishment request based on the identifier of the first radio equipment controller. For example, the processing module 202 determines, based on the identifier of the first radio equipment controller, whether the carrier establishment request is from a radio equipment controller indicated by the identifier of the first radio equipment controller. This solution helps prevent other radio equipment controllers from maliciously forging the carrier establishment request of the first radio equipment controller and affecting carrier establishment of the first radio equipment controller.

In this implementation, because the radio equipment in the conventional technology does not have the first resource table, the radio equipment in the conventional technology cannot query, based on an identifier of a radio equipment controller, a physical resource corresponding to the radio equipment controller.

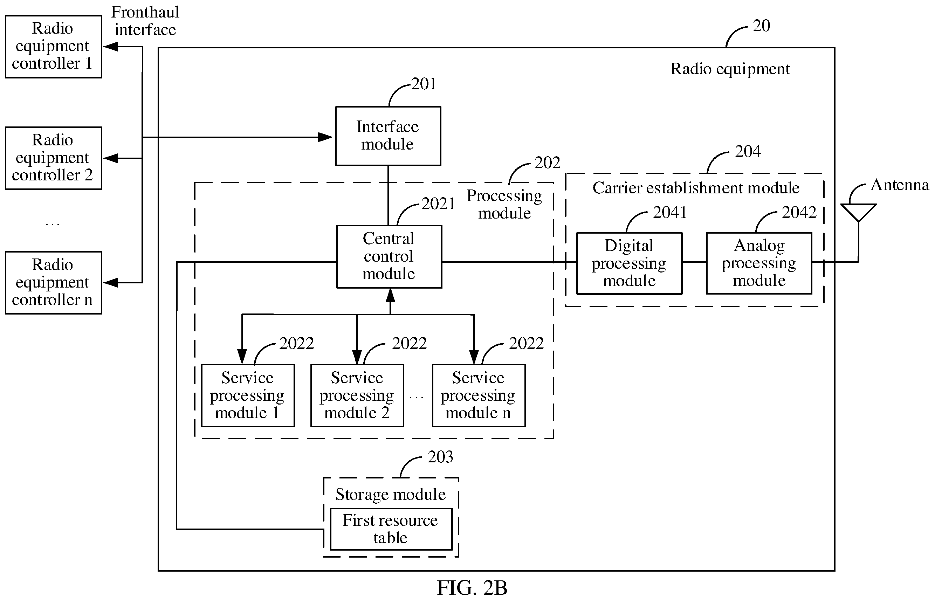

The foregoing describes the main structure of the radio equipment 20. The following further describes each functional module inside the radio equipment 20 with reference to FIG. 2B. FIG. 2B shows another implementation of the radio equipment 20 according to this application. The radio equipment 20 includes the interface module 201, the processing module 202, the storage module 203, and the carrier establishment module 204.

The processing module 202 includes one central control module 2021 and at least two service processing modules 2022. The at least two radio equipment controllers are in one-to-one correspondence with the at least two service processing modules 2022, and each service processing module 2022 only processes a message (for example, the carrier establishment request) from the corresponding radio equipment controller. For example, the central control module 2021 in FIG. 2B is connected to n service processing modules 2022 including a service processing module 1 and a service processing module 2, where n is an integer greater than 1. If the radio equipment controller 1 corresponds to the service processing module 1, the service processing module 1 may only process a message from the radio equipment controller 1. If the radio equipment controller 2 corresponds to the service processing module 2, the service processing module 2 may only process a message from the radio equipment controller 2. The rest may be deduced by analogy, and details are not described herein.

It should be understood that, the first radio equipment controller corresponds to a first service processing module, and the first service processing module is not explicitly indicated in FIG. 2B. If the identifier of the first radio equipment controller indicates the radio equipment controller 1, the first service processing module is the service processing module 1 in FIG. 2B. The rest may be deduced by analogy, and details are not described herein.

Specifically, the central control module 2021 in the processing module 202 is configured to: determine, from the at least two service processing modules 2022 based on the identifier of the first radio equipment controller in the carrier establishment request, the first service processing module corresponding to the first radio equipment controller, and transmit the carrier establishment request to the first service processing module. The first service processing module is configured to determine the first physical resource information based on the carrier establishment request, and transmit the first physical resource information to the central control module 2021. The central control module 2021 is configured to determine, based on the first physical resource information and the physical resource corresponding to the first radio equipment controller, whether to establish the first carrier.

A service processing module is configured to process a service related to a corresponding radio equipment controller. The first service processing module is used as an example. The first service processing module corresponding to the first radio equipment controller is configured to determine the first physical resource information based on the carrier establishment request from the first radio equipment controller. The first service processing module may determine the first physical resource information in the following two implementations.

In an implementation, if the carrier establishment request directly carries the first physical resource information, the first service processing module directly obtains the first physical resource information from the carrier establishment request.

In another implementation, the carrier establishment request carries a first carrier parameter. The first carrier parameter indicates a characteristic of the first carrier. In this case, the first service processing module is specifically configured to generate the first physical resource information based on the first carrier parameter according to a preset rule corresponding to the first radio equipment controller. Preset rules corresponding to different radio equipment controllers in the at least two radio equipment controllers are different. The first physical resource information includes the information about the at least one of the frequency band resource, the power resource, the channel resource, the carrier resource, and the flow quantity resource.

The preset rule may be understood as processing logic of the service processing module, and different service processing modules correspond to different radio equipment controllers. If the different service processing modules have different service processing logic, the different service processing modules correspond to different preset rules. In this embodiment, the preset rule may be understood as a rule for converting the first carrier parameter into first radio resource information. If the first carrier parameter is input into a service processing module (for example, a second service processing module corresponding to a second radio equipment controller) corresponding to another radio equipment controller, the second service processing module may not be able to identify the first carrier parameter, or may not be able to convert the first carrier parameter into the first physical resource information.

For example, if the operator 1 configures an FDD LTE 2T2R carrier with a bandwidth of 20 M on the first radio equipment controller via a network management device, transmit frequencies 2110 MHz to 2130 MHz and receive frequencies 1920 MHz to 1940 MHz are used. In this case, the first carrier parameter in the carrier establishment request is "bandwidth=20 M, duplex mode=FDD, standard=LTE, transmit mode=2T, receive mode=2R, and frequency band=2.1 GHz". Then, the first service processing module determines, based on the first carrier parameter and a preset rule corresponding to the first service processing module, that the information (that is, the first physical resource information) about the physical resources required for establishing the first carrier includes a frequency band resource "2.1 GHz (receive frequencies 1920 MHz to 1940 MHz and transmit frequencies 2110 MHz to 2130 MHz)", a power resource "2.1 GHz 20 W per channel", a channel resource "2.1 GHz 2T", an uplink flow quantity resource "four flows", and a downlink flow quantity resource "four flows".

The central control module 2021 may determine whether to establish the first carrier in the following two implementations.

In an implementation, when the resource quantity of physical resources indicated by the first physical resource information is less than the resource quantity of physical resources corresponding to the first radio equipment controller, the central control module 2022 determines to allow the establishment of the first carrier, and transmits the first physical resource information to the carrier establishment module 204. Then, the carrier establishment module 204 is configured to establish the first carrier by using the physical resource indicated by the first physical resource information. The carrier establishment module 204 includes a digital processing module 2041 and an analog processing module 2042. The digital processing module 2041 includes a circuit or device that has a digital signal processing function, such as an up converter, a down converter, and a digital-to-analog converter. The analog processing module 2042 includes a circuit or device that has an analog signal processing function, such as an intermediate frequency amplifier, a filter, a frequency mixer, or a power amplifier.

Optionally, after the central control module 2022 determines to allow the establishment that is of the first carrier and that is based on the first physical resource information, the central control module 2022 updates, based on the resource quantity of physical resources indicated by the first physical resource information, the resource quantity of physical resources corresponding to the first radio equipment controller in the first resource table. For example, the central control module 2022 subtracts the resource quantity of physical resources indicated by the first physical resource information from the resource quantity of physical resources corresponding to the first radio equipment controller in the first resource table, to obtain an updated resource quantity of physical resources corresponding to the first radio equipment controller. For example, the physical resource indicated by the first physical resource information includes the frequency band resource "2.1 GHz (1920 MHz to 1940 MHz/2110 MHz to 2130 MHz)" and the channel power resource "2.1 GHz 20 W", and the physical resource that is originally recorded in the first resource table and that corresponds to the first radio equipment controller includes the frequency band resource "2.1 GHz (1920 MHz to 1960 MHz/2110 MHz to 2150 MHz)", the channel power resource "2.1 GHz 40 W", and the carrier resource "4". After updating, the physical resource that is recorded in the first resource table and that corresponds to the first radio equipment controller includes a frequency band resource "2.1 GHz (1940 MHz to 1960 MHz/2130 MHz to 2150 MHz)", a channel power resource "2.1 GHz 20 W, and a carrier resource "3". Optionally, the central control module 2022 further stores the first physical resource information in the storage module 203, to record the physical resource used to establish the first carrier, for example, types of physical resources used by the carrier establishment module 204 to establish the first carrier and a resource quantity of each type of physical resource.

In another implementation, when the resource quantity of physical resources indicated by the first physical resource information is greater than the resource quantity of physical resources corresponding to the first radio equipment controller, the central control module 2022 sends a first notification message to the first service processing module. The first notification message indicates that the physical resource corresponding to the first radio equipment controller is insufficient for establishing the first carrier. The first service processing module controls the interface module 201 to send the carrier establishment response to the first radio equipment controller. The carrier establishment response indicates that the establishment of the first carrier fails.

In this implementation, the processing module 202 includes two types of modules: a control-type module (that is, the central control module 2021) and a service-type module (that is, the at least two service processing modules 2022). Because the at least two service processing modules are independent of each other, and each service processing module corresponds to a radio equipment controller, each service processing module can independently process a message (for example, the carrier establishment request) for the corresponding radio equipment controller. In comparison with a solution in which only one service processing module processes messages from different radio equipment controllers, this solution not only helps improve service processing efficiency, but also helps implement service processing diversity in one radio equipment, and also helps implement independent update and maintenance of each service processing module. In addition, when the plurality of radio equipment controllers connected to the radio equipment 20 belong to different operators, service processing modules (which may also be understood as service processing software) of the different operators can run in the radio equipment 20, to help generate, in one radio equipment based on different service processing modules, different carriers that meet requirements of the operators.

Further, in an optional implementation, the interface module 201 is further configured to obtain a resource configuration message. The resource configuration message includes the first resource table. In this implementation, because the radio equipment and the radio equipment controller are not necessarily located at a same geographical position (for example, the radio equipment is usually located on a signal tower, and the radio equipment controller is located in an equipment room of a base station), the first resource table is sent to the radio equipment 20 via a radio equipment controller connected to the radio equipment 20, to help improve resource configuration efficiency, avoid manual configuration on the signal tower, and help reduce complexity of operation and maintenance management.

In addition, in an optional implementation, the interface module 201 is further configured to receive a resource query message from the first radio equipment controller. The resource query message is used to query usage information of the physical resource corresponding to the first radio equipment controller. The resource query message includes the identifier of the first radio equipment controller. The radio equipment 20 can determine, based on the identifier of the first radio equipment controller in the query message, to query resource usage of the first radio equipment controller, instead of querying usage information of a physical resource corresponding to another radio equipment controller. Correspondingly, the radio equipment 20 feeds back, only to the first radio equipment controller, the usage information of the physical resource corresponding to the first radio equipment controller.

Specifically, the central control module 2021 transmits, based on the identifier of the first radio equipment controller, the resource query message to the first service processing module corresponding to the first radio equipment controller. The first service processing module queries the usage information of the physical resource corresponding to the first radio equipment controller. The interface module 201 sends, to the first radio equipment controller, the usage information of the physical resource corresponding to the first radio equipment controller.

In this implementation, it is proposed that each service processing module may query usage information of a physical resource corresponding to a radio equipment controller, and feed back, to the radio equipment controller, the usage information of the physical resource corresponding to the radio equipment controller. This solution helps prevent the radio equipment 20 from mistakenly reporting, to the radio equipment controller, usage of the physical resource corresponding to the radio equipment controller.

In addition, in an optional implementation, the central control module 2021 is further configured to obtain fault information. The fault information indicates a faulty physical resource in the radio equipment 20. Then, the central control module 2021 determines at least one second radio equipment controller from the at least two radio equipment controllers. The second radio equipment controller is a radio equipment controller that uses the physical resource indicated by the fault information. Then, the interface module 201 is controlled to send the fault information to the second radio equipment controller.

In this implementation, it is proposed that the central control module 2021 of the radio equipment 20 can detect a fault of the physical resource, and determine a fault impact range based on the fault of the physical resource, that is, which radio equipment controllers (which are referred to as second radio equipment controllers in this implementation) are affected by the faulty physical resource. Then, the central control module 2021 controls only the interface module 201 to send the fault information to the second radio equipment controller, instead of sending the fault information to another radio equipment controller. In this implementation, the radio equipment 20 can accurately feed back the fault to the radio equipment controller, and the radio equipment 20 is prevented from feeding back the fault to all radio equipment controllers connected to the radio equipment 20.

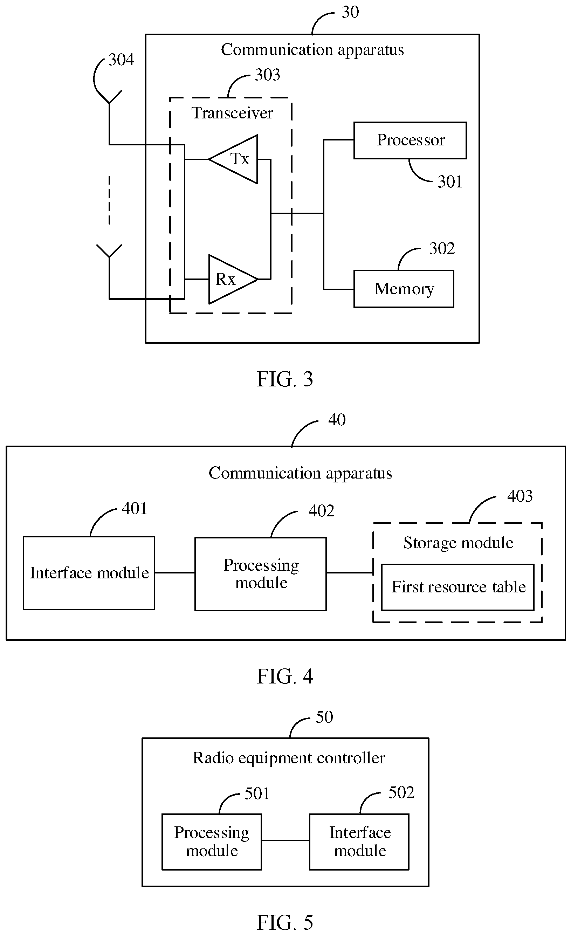

In addition, as shown in FIG. 3, this application further provides a communication apparatus 30. The radio equipment 20 in the embodiment corresponding to FIG. 2A or FIG. 2B may be based on a structure of the communication apparatus 30 shown in FIG. 3 in this embodiment. It should be understood that the communication apparatus 30 may be a radio unit (radio unit, RU) (which is also referred to as a radio frequency unit) in an access network RAN device (for example, a base station), or may be another processing apparatus having a function of processing a radio signal (for example, an intermediate frequency signal or a radio frequency signal). For example, the communication apparatus 30 may be a remote radio unit (remote radio unit, RRU) (which is also referred to as a remote radio module) or a remote radio head (remote radio head, RRH) in the base station. The RRU is generally used for conventional outdoor coverage of a macro base station. The RRH is generally used for indoor coverage of an indoor distributed system. For example, the communication apparatus 30 may alternatively be an active antenna unit (active antenna unit, AAU), that is, a processing unit integrates an RRU (or an RRH) and an antenna. In actual application and subsequent network evolution, the radio equipment may alternatively be another device or apparatus having a function of receiving and sending a radio frequency signal, and processing the radio frequency signal or an intermediate frequency signal.

The communication apparatus 30 includes at least one processor 301, at least one memory 302, at least one transceiver 303, and one or more antennas 304. The processor 301, the memory 302, and the transceiver 303 are connected via a connection apparatus, and the antenna 304 is connected to the transceiver 303. The connection apparatus may include various types of interfaces, transmission cables, buses, or the like. This is not limited in this embodiment.

The memory 302 is mainly configured to store a software program and data, for example, the foregoing first resource table, where the first resource table includes the physical resource corresponding to each of the at least two radio equipment controllers. Optionally, the first resource table further includes the types of the physical resources that are allowed to be used by each radio equipment controller, and the resource quantity of each type of physical resource or the resource attribute of each type of physical resource.

It should be understood that the memory 302 may exist independently, and is connected to the processor 301. Optionally, the memory 302 may be integrated with the processor 301, for example, integrated into one or more chips. The memory 302 can store program code for executing the technical solutions in embodiments of this application, and the processor 301 controls the execution. Various types of executed computer program code may also be considered as drivers of the processor 301. It should be understood that FIG. 3 in this embodiment shows only one memory and one processor. However, in actual application, the communication apparatus 30 may include a plurality of processors or a plurality of memories. This is not specifically limited herein. In addition, the memory 302 may also be referred to as a storage medium, a storage device, or the like. The memory 302 may be a storage element (that is, an on-chip storage element) located on a same chip as the processor, or an independent storage element. This is not limited in this embodiment of this application.

In this embodiment, the transceiver 303 may be configured to support receiving or sending of a radio frequency signal between the communication apparatus 30 and a terminal device, and the transceiver 303 may be connected to the antenna 304. The transceiver 303 includes a transmitter Tx and a receiver Rx. Specifically, the one or more antennas 304 may receive a radio frequency signal. The receiver Rx of the transceiver 303 is configured to receive the radio frequency signal from the antenna 304, and convert the radio frequency signal into a digital baseband signal or a digital intermediate frequency signal, so that the digital baseband signal or the digital intermediate frequency signal is transmitted to the radio equipment controller, to enable the radio equipment controller to perform further processing, for example, demodulating processing and decoding processing on the digital baseband signal or the digital intermediate frequency signal. In addition, the transmitter Tx of the transceiver 303 is further configured to receive a modulated digital baseband signal or a modulated digital intermediate frequency signal from the radio equipment controller, convert the modulated digital baseband signal or the modulated digital intermediate frequency signal into a radio frequency signal, and send the radio frequency signal via the one or more antennas 304. Specifically, the receiver Rx may selectively perform one-level or multi-level frequency down-mixing processing or analog-to-digital conversion processing on the radio frequency signal to obtain the digital baseband signal or the digital intermediate frequency signal. A sequence of the frequency down-mixing processing and the analog-to-digital conversion processing is adjustable. The transmitter Tx may selectively perform one-level or multi-level frequency up-mixing processing or digital-to-analog conversion on the modulated digital baseband signal or the modulated digital intermediate frequency signal to obtain the radio frequency signal. A sequence of the frequency up-mixing processing and the digital-to-analog conversion is adjustable. The digital baseband signal and the digital intermediate frequency signal may be collectively referred to as a digital signal.

It should be understood that the transceiver 303 may also be referred to as a transceiver unit, a transceiver machine, a transceiver apparatus, or the like. Optionally, a device configured to implement a receiving function in the transceiver unit may be considered as a receiving unit, and a device configured to implement a sending function in the transceiver unit may be considered as a sending unit. In other words, the transceiver unit includes the receiving unit and the sending unit. The receiving unit may also be referred to as a receiver machine, an input interface, a receiving circuit, or the like. The sending unit may be referred to as a transmitter machine, a transmitter, a transmitting circuit, or the like.

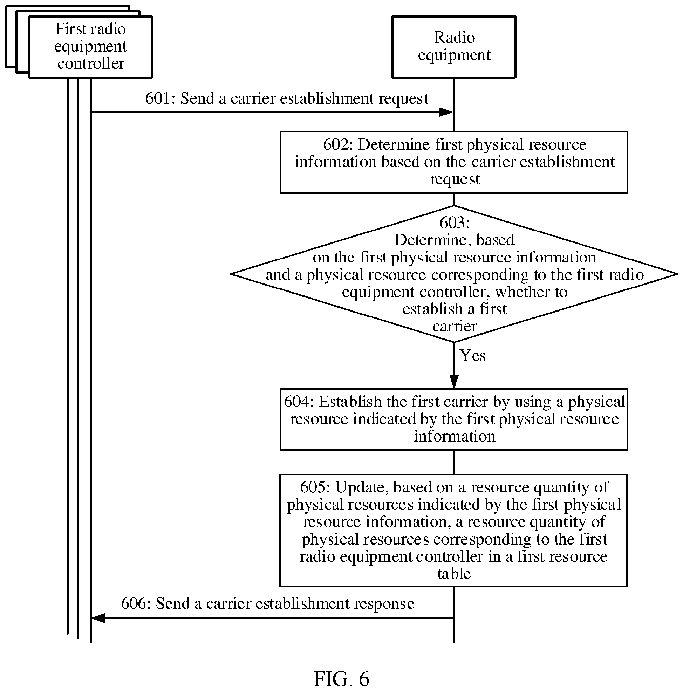

In addition, the processor 301 is mainly configured to: process a communication protocol and communication data, execute a software program, and process data of the software program, for example, configured to support the communication apparatus 30 in performing the actions described in the foregoing embodiments. In a possible implementation, the communication apparatus 30 is configured to perform the method in the embodiment corresponding to FIG. 6 described below.

Specifically, the processor 301 of the communication apparatus 30 is configured to obtain a carrier establishment request from a first radio equipment controller. The first radio equipment controller is one of at least two radio equipment controllers connected to radio equipment. The carrier establishment request is used to request to establish a first carrier of the first radio equipment controller. The processor 301 is further configured to determine first physical resource information based on the carrier establishment request. The first physical resource information indicates a physical resource required for establishing the first carrier. The processor 301 is further configured to determine, based on the first physical resource information and a physical resource corresponding to the first radio equipment controller in the radio equipment, whether to establish the first carrier. The at least two radio equipment controllers correspond to different physical resources in the radio equipment.

In this embodiment, the communication apparatus 30 can not only be connected to the at least two radio equipment controllers, but also learn of the physical resource corresponding to each radio equipment controller, and the at least two radio equipment controllers correspond to the different physical resources in the radio equipment. Therefore, after receiving the carrier establishment request, the communication apparatus 30 can determine, based on the physical resource corresponding to the first radio equipment controller (that is, a radio equipment controller that sends the carrier establishment request), whether resources indicated by the first physical resource information are sufficient for establishing the first carrier, without using a physical resource corresponding to other radio equipment controllers. Therefore, the plurality of radio equipment controllers can independently manage a physical resource in the communication apparatus 30. When the plurality of radio equipment controllers share a same communication apparatus 30, flexibility of managing the communication apparatus 30 by the radio equipment controller can be improved.

In a possible implementation, the communication apparatus 30 stores a first resource table. The first resource table includes the physical resource corresponding to each of the at least two radio equipment controllers. Optionally, the first resource table further includes types of physical resources that are allowed to be used by each radio equipment controller, and a resource quantity of each type of physical resource or a resource attribute of each type of physical resource.

In addition, the carrier establishment request received by the communication apparatus 30 includes an identifier of the first radio equipment controller. The identifier of the first radio equipment controller indicates to apply for the physical resource corresponding to the first radio equipment controller. The physical resource corresponding to the first radio equipment controller includes a plurality of types of physical resources such as a frequency band resource, a power resource, a channel resource, and a carrier resource.

The processor 301 is specifically configured to query, based on the identifier of the first radio equipment controller, the physical resource corresponding to the first radio equipment controller in the first resource table.

In a conventional technology, because a radio equipment controller of a primary operator applies for resources from the radio equipment, the radio equipment does not sense that a physical resource applied for by the radio equipment controller of the primary operator is used to establish a carrier of which operator. Therefore, the radio equipment in the conventional technology does not have the foregoing first resource table. In this application, the first resource table that records the physical resource corresponding to each radio equipment controller is stored in the radio equipment, so that the physical resource in the radio equipment can be allocated to the at least two radio equipment controllers connected to the radio equipment, to enable the radio equipment to use the physical resource corresponding to each radio equipment controller in a carrier establishment phase, and ensure that resource allocation in the radio equipment does not conflict.

In a possible implementation, the processor 301 is specifically configured to: when a resource quantity of physical resources indicated by the first physical resource information is less than a resource quantity of physical resources corresponding to the first radio equipment controller, establish the first carrier by using the physical resource indicated by the first physical resource information.

In a possible implementation, the processor 301 is further configured to update, by the radio equipment based on the resource quantity of physical resources indicated by the first physical resource information, the resource quantity of physical resources corresponding to the first radio equipment controller in the first resource table.

In a possible implementation, the carrier establishment request further includes a first carrier parameter. The first carrier parameter indicates a characteristic of the first carrier. The processor 301 is specifically configured to generate the first physical resource information based on the first carrier parameter according to a preset rule corresponding to the first radio equipment controller. Preset rules corresponding to different radio equipment controllers in the at least two radio equipment controllers are different. The first physical resource information includes information about at least one of a frequency band resource, a power resource, a channel resource, a carrier resource, and a flow quantity resource.

Specifically, refer to the functions of the radio equipment 20 in FIG. 2A and FIG. 2B. Details are not described herein.

In addition, as shown in FIG. 4, this application further provides a communication apparatus 40. The communication apparatus 40 is a chip, and is configured to implement some or all functions of the radio equipment 20 described in FIG. 2A or FIG. 2B. It should be understood that, in this implementation, the communication apparatus 40 and the structures of the carrier establishment module 204, the antenna, and the like that are described above may constitute the radio equipment 20.

The communication apparatus 40 includes an interface module 401, a processing module 402, and a storage module 403.

The interface module 401 is configured to obtain a carrier establishment request from a first radio equipment controller. The first radio equipment controller is one of at least two radio equipment controllers connected to the radio equipment. The carrier establishment request is used to request to establish a first carrier of the first radio equipment controller.

The processing module 402 is configured to: determine first physical resource information based on the carrier establishment request, and determine, based on the first physical resource information and physical resource corresponding to the first radio equipment controller in the radio equipment, whether to establish the first carrier. The first physical resource information indicates a physical resource required for establishing the first carrier. The at least two radio equipment controllers correspond to different physical resources in the radio equipment.

The storage module 403 is configured to store a first resource table. The first resource table includes the physical resource corresponding to each of the at least two radio equipment controllers.

Optionally, the carrier establishment request includes an identifier of the first radio equipment controller. The identifier of the first radio equipment controller indicates to apply for the physical resource corresponding to the first radio equipment controller. The processing module 402 is further configured to query, based on the identifier of the first radio equipment controller, the physical resource corresponding to the first radio equipment controller in the first resource table.

Specifically, the interface module 401, the processing module 402, and the storage module 403 in this implementation are similar to the interface module 201, the processing module 202, and the storage module 203 in FIG. 2A. For details, refer to the foregoing related descriptions. Details are not described herein.

In addition, as shown in FIG. 5, this application further provides a radio equipment controller 50. For the first radio equipment controller described above, refer to a structure shown in FIG. 5. The radio equipment controller 50 includes a processing module 501 and an interface module 502. The processing module 501 is configured to generate a carrier establishment request. The carrier establishment request is used to request to establish a first carrier of a first radio equipment controller. The first radio equipment controller is any one of at least two radio equipment controllers connected to radio equipment. The carrier establishment request includes an identifier of the first radio equipment controller. The identifier of the first radio equipment controller indicates to apply for a physical resource corresponding to the first radio equipment controller in the radio equipment. The at least two radio equipment controllers correspond to different physical resources in the radio equipment. In addition, the interface module 502 is configured to send the carrier establishment request to the radio equipment.

In this embodiment, any one of a plurality of radio equipment controllers connected to the radio equipment can send the carrier establishment request to the radio equipment, to request to establish the first carrier by using the physical resource corresponding to the first radio equipment controller in the radio equipment. Therefore, the plurality of radio equipment controllers can independently manage a physical resource in the radio equipment. When the plurality of radio equipment controllers share same radio equipment, flexibility of managing the radio equipment by the radio equipment controller can be improved.

The following describes a main procedure of a resource management method provided in this application with reference to FIG. 6. A radio equipment controller and radio equipment perform the following steps.

Step 601: A first radio equipment controller sends a carrier establishment request to the radio equipment. Correspondingly, the radio equipment obtains the carrier establishment request from the first radio equipment controller.

The first radio equipment controller is one of at least two radio equipment controllers connected to the radio equipment controller. Specifically, for a connection manner between the first radio equipment controller and the radio equipment, refer to the related descriptions corresponding to FIG. 2A or FIG. 2B. Details are not described herein.

In addition, the carrier establishment request is used to request to establish a first carrier of the first radio equipment controller. It may also be understood as that the carrier establishment request is used to apply to the radio equipment for using some physical resources, so that the radio equipment uses the physical resource to establish the first carrier for the first radio equipment controller.

The physical resource includes but is not limited to a frequency band resource, a power resource, a channel resource, a carrier resource, and a flow quantity resource.

The following separately describes the physical resources.

The first physical resource information is determined based on content carried in the carrier establishment request, and the first physical resource information indicates a physical resource required for establishing the first carrier. It should be understood that the first physical resource information may indicate one type of physical resource, or may indicate a plurality of types of physical resources. The physical resource includes but is not limited to the frequency band resource, the power resource, the channel resource, the carrier resource, and the flow quantity resource. Therefore, the first physical resource information includes information about at least one of the frequency band resource, the power resource, the channel resource, the carrier resource, and the flow quantity resource.

The frequency band resource refers to a frequency band or a frequency domain range used when a carrier is established. Generally, the frequency band resource is a resource related to an operator. Each operator has a fixed frequency band, and different operators are allowed to use different frequency bands. For example, the frequency band resource is a licensed (licensed) frequency band of the operator, and the different operators have different licensed (licensed) frequency bands. A radio equipment controller is allowed to use only a frequency band of an operator to which the radio equipment controller belongs. For example, if 1.8 GHz (1890 MHz to 1895 MHz) belongs to an operator 1, a radio equipment controller of an operator 2 cannot use a frequency band resource of 1.8 GHz (1890 MHz to 1895 MHz), and only a radio equipment controller of the operator 1 can apply for using the frequency band resource of 1.8 GHz (1890 MHz to 1895 MHz). In addition, the frequency band resource includes a transmit frequency and a receive frequency. Generally, in a frequency division duplex (frequency division duplex, FDD) mode, the transmit frequency is different from the receive frequency. For example, in 1.8 GHz, 1765 MHz to 1785 MHz may be set as transmit frequencies (which may also be referred to as uplink frequencies), and 1860 MHz to 1880 MHz may be set as receive frequencies (which may also be referred to as downlink frequencies). For another example, in 2.1 GHz, 1920 MHz to 1960 MHz may be set as transmit frequencies, and 2110 MHz to 2150 MHz may be set as receive frequencies. Generally, in a time division duplex (time division duplex, TDD) mode, the transmit frequency may be the same as the receive frequency. For example, in 3.5 GHz, 3580 MHz to 3600 MHz may be set as transmit frequencies and a receive frequency band.

It should be understood that whether to use the FDD mode or the TDD mode for the frequency band resource is related to the carrier that needs to be established by the radio equipment controller. A duplex mode of the frequency band resource is not limited in this application.

In addition, the power resource refers to a multiple of power of the established carrier that is amplified by a power amplifier. Generally, power resources that can be used by carriers using different frequency band resources are independent. It should be understood that the power resource is at a frequency band level, and the radio equipment shares the power resource with all carriers in a same frequency band. For example, all carriers in 1.8 GHz share a 20 W power resource, and all carriers in 2.1 GHz share a 40 W power resource. Therefore, if a carrier in one of the frequency bands occupies a large quantity of power resources (for example, transmit power is high), other carriers in the frequency band can occupy a small quantity of power resources (for example, transmit power is low). It should be understood that higher transmit power of the carrier indicates a longer transmission distance of the carrier and a wider range of services that can be provided by the carrier. However, higher transmit power may not be an optimal choice. Because transmit power of a terminal device is fixed, if a transmission distance is extremely long, the terminal device may receive only a signal from the radio equipment, but the radio equipment cannot receive a signal sent by the terminal device. Generally, the operator evenly allocates power based on a spectrum bandwidth to ensure same coverage. For example, if power of 2.1 GHz is 20 W, there are two carriers in 2.1 GHz, and bandwidths of the two carriers are 20 M and 5 M respectively, a power resource occupied by the 20 M carrier is 16 W, and a power resource occupied by the 5 M carrier is 4 W.

In addition, a quantity of channel resources refers to a quantity of occupied radio frequency link channels. Generally, the channel resource is related to a frequency band. For example, if in the radio equipment, a quantity of channel resources in a 2.1 GHz frequency band is 2T, and a quantity of channel resources in a 1.8 GHz frequency band is 3T, it indicates that the radio equipment can use a maximum of two channels when establishing a carrier in the 2.1 GHz frequency band, and can use a maximum of three channels when establishing a carrier in the 1.8 GHz frequency band. In some possible implementations, the channel resource can further indicate an identifier or a number of an occupied channel, that is, indicate which channels are occupied. For example, if in the radio equipment, quantities of channel resources in a 2.1 GHz frequency band are T1 and T2, it indicates that the radio equipment can use two channels numbered "T1" and "T2" when establishing a carrier in the 2.1 GHz frequency band.

It should be noted that, because transmit devices of channels in the radio equipment are independent, power of the channels in the radio equipment are also independent of each other. If a channel is shared by a plurality of radio equipment controllers, power of the channel also needs to be shared by the plurality of radio equipment controllers. Therefore, in actual application, sharing is generally considered by combining the channel resource and the power resource. In a possible implementation, the channel resource and the power resource are combined into a channel power resource. For example, on a channel A, power allocated to 1.8 GHz is 20 W, and power allocated to 2.1 GHz is 40 W.

In addition, a quantity of carrier resources refers to a quantity of carriers that can be processed by the radio equipment. The carrier resource is mainly an intermediate frequency digital resource, and is used to perform processing such as frequency conversion/clipping/predistortion on each carrier. For example, a maximum quantity of carrier resources of the radio equipment is 4 (in other words, the radio equipment can process a maximum of four carriers). It is assumed that frequency band resources corresponding to a radio equipment controller are 2.1 GHz (2130 MHz to 2150 MHz) 20 M and 1.8 GHz (1830 MHz to 1850 MHz) 20 M. If the radio equipment controller chooses to establish one 2.1 GHz 20 M carrier and one 1.8 GHz 20 M carrier, a quantity of carrier resources that need to be consumed by the radio equipment is 2. If the radio equipment controller chooses to establish two 2.1 GHz 10 M carriers and two 1.8 GHz 10 M carriers, a quantity of carrier resources that need to be consumed by the radio equipment is 4. When the plurality of radio equipment controllers share carrier resources, the more carrier resources a radio equipment controller uses, the fewer carrier resources are available for other radio equipment controllers, and even the other radio equipment controllers cannot establish carriers successfully due to a lack of carrier resources when there are spectrum/power resources.

In addition, a quantity of flow quantity resources refers to a quantity of service flows that are of a terminal user and that can be processed by the radio equipment at a same moment. The flow quantity resource includes an uplink flow quantity resource and a downlink flow quantity resource. A quantity of uplink flow quantity resources refers to a quantity of uplink service flows that are of the terminal user and that can be processed by the radio equipment at a same moment. A quantity of downlink flow quantity resources refers to a quantity of downlink service flows that are of the terminal user and that can be processed by the radio equipment at a same moment.

It should be understood that the flow quantity resource is a type of a baseband processing resource. When the radio equipment has a baseband processing function, for example, the radio equipment controller is an AAU, the radio equipment can share the flow quantity resource with the plurality of radio equipment controllers. Generally, more flow quantity resources allocated to the radio equipment controller indicate that the radio equipment can process data of more terminal users for the radio equipment controller, and therefore better communication experience can be provided for the user.

It should be understood that the physical resource is merely an example listed for ease of understanding by a reader. In actual application, the radio equipment may further provide other types of physical resources for the at least two radio equipment controllers. This application does not limit a specific physical resource provided by the radio equipment.

In addition, for examples of the frequency band resource, the power resource, the channel resource, the carrier resource, and the flow quantity resource, refer to the related descriptions in the foregoing embodiment corresponding to FIG. 2A. Details are not described herein.

The carrier establishment request includes an identifier of the first radio equipment controller. The identifier of the first radio equipment controller indicates to apply for the physical resource corresponding to the first radio equipment controller.

Optionally, if information about the physical resource corresponding to the different radio equipment controllers in a first resource table is stored in different storage positions, the radio equipment may query, based on the identifier of the first radio equipment controller, only a storage page of the physical resource corresponding to the first radio equipment controller in the storage module, without traversing storage positions of the entire first resource table.

Optionally, the radio equipment may further perform validity check on the carrier establishment request based on the identifier of the first radio equipment controller. For example, the radio equipment determines, based on the identifier of the first radio equipment controller, whether the carrier establishment request is from a radio equipment controller indicated by the identifier of the first radio equipment controller. This solution helps prevent other radio equipment controllers from maliciously forging the carrier establishment request of the first radio equipment controller and affecting carrier establishment of the first radio equipment controller.

In addition, the carrier establishment request further carries some information required for establishing the first carrier.

In a possible implementation, the carrier establishment request further includes a first carrier parameter. The first carrier parameter indicates a characteristic of the first carrier.

For example, if the operator 1 configures an FDD LTE 2T2R carrier with a bandwidth of 20 M on the first radio equipment controller via a network management device, transmit frequencies 2110 MHz to 2130 MHz and receive frequencies 1920 MHz to 1940 MHz are used. In this case, the first carrier parameter in the carrier establishment request is "bandwidth=20 M, duplex mode=FDD, standard=LTE, transmit mode=2T, receive mode=2R, and frequency band=2.1 GHz".

It should be understood that the radio equipment generally does not directly use the first carrier parameter to establish the first carrier. Generally, the radio equipment needs to first convert the first carrier parameter into the first physical resource information, and then the radio equipment generates the first carrier based on the first physical resource information. For details, refer to related descriptions in step 602 below.

In another possible implementation, the carrier establishment request further includes the first physical resource information.

For example, if the operator 1 configures an FDD LTE 2T2R carrier with a bandwidth of 20 M on the first radio equipment controller via a network management device, transmit frequencies 2110 MHz to 2130 MHz and receive frequencies 1920 MHz to 1940 MHz are used. In this case, if the carrier establishment request directly carries the first physical resource information, the first physical resource information in this example includes a frequency band resource "2.1 GHz (transmit frequencies 1950 MHz to 1970 MHz and receive frequencies 2140 MHz to 2160 MHz)", a power resource "2.1 GHz 20 W per channel", a channel resource "2.1 GHz 2T", an uplink flow quantity resource "four flows", and a downlink flow quantity resource "four flows".

Specifically, for descriptions of the first carrier parameter and the first physical resource information, refer to the related descriptions in FIG. 2A and FIG. 2B. Details are not described herein.

Step 602: The radio equipment determines the first physical resource information based on the carrier establishment request.

The first physical resource information indicates the physical resource required for establishing the first carrier. It should be understood that the first physical resource information may indicate one type of physical resource, or may indicate a plurality of types of physical resources. The physical resource includes but is not limited to the frequency band resource, the power resource, the channel resource, the carrier resource, and the flow quantity resource. Therefore, the first physical resource information includes the information about the at least one of the frequency band resource, the power resource, the channel resource, the carrier resource, and the flow quantity resource.

In addition, for explanations of the frequency band resource, the power resource, the channel resource, the carrier resource, and the flow quantity resource, refer to the related descriptions in step 601. Details are not described herein.

In this embodiment, the radio equipment determines the first physical resource information in different manners based on different content carried in the carrier establishment request.

In a possible implementation, the carrier establishment request carries the first carrier parameter. The first carrier parameter indicates the characteristic of the first carrier. In this case, the radio equipment generates the first physical resource information based on the first carrier parameter according to a preset rule corresponding to the first radio equipment controller. Preset rules corresponding to different radio equipment controllers in the at least two radio equipment controllers are different.

The preset rule may be understood as processing logic of a service processing module (which may also be understood as service processing software) in the radio equipment, and different service processing modules correspond to different radio equipment controllers. If the different service processing modules have different service processing logic, the different service processing modules correspond to different preset rules. In this embodiment, the preset rule may be understood as a rule for converting the first carrier parameter into first radio resource information. If the first carrier parameter is input into a service processing module (for example, a second service processing module corresponding to a second radio equipment controller) corresponding to another radio equipment controller, the second service processing module may not be able to identify the first carrier parameter, or may not be able to convert the first carrier parameter into the first physical resource information.

In another possible implementation, the carrier establishment request directly carries the first physical resource information. In this case, the radio equipment directly obtains the first physical resource information from the carrier establishment request.

In this embodiment, two implementations of the carrier establishment request are provided, and two implementations of determining the first physical resource information are also correspondingly provided. In actual application, the radio equipment may use any one of the foregoing implementations. This is not specifically limited herein.

Step 603: The radio equipment determines, based on the first physical resource information and the physical resource corresponding to the first radio equipment controller, whether to establish the first carrier.

The at least two radio equipment controllers correspond to different physical resources in the radio equipment. To be specific, different radio equipment controllers can use different physical resources located in the radio equipment, in other words, the physical resources in the radio equipment are allocated to the at least two radio equipment controllers, and the at least two radio equipment controllers correspond to the different physical resources in the radio equipment. In other words, information such as radio equipment controllers to which the physical resources in the radio equipment are allocated and physical resources that are allowed to be used by each radio equipment controller is determined. Therefore, when the radio equipment learns of, based on the first physical resource information, physical resources that need to be used when the first radio equipment controller applies for establishing the first carrier, the radio equipment needs to determine a relationship between the physical resource indicated by the first physical resource information and the physical resource corresponding to the first radio equipment controller in the radio equipment, to determine whether to establish the first carrier.

In this embodiment, the radio equipment stores the first resource table. The first resource table includes the physical resource corresponding to each of the at least two radio equipment controllers. To be specific, the radio equipment determines, based on the first resource table, the physical resource corresponding to each radio equipment controller, in other words, the radio equipment records, in the first resource table, the physical resource that can be used by each radio equipment controller. For the first resource table, refer to the related descriptions of Table 1-1. Details are not described herein.

For example, the first resource table is preselected and configured by the user, or may be dynamically generated by the radio equipment. For example, before the radio equipment receives the carrier establishment request from the first radio equipment controller, the radio equipment obtains a resource configuration message. The resource configuration message includes the first resource table.

The carrier establishment request includes the identifier of the first radio equipment controller. The identifier of the first radio equipment controller indicates to apply for the physical resource corresponding to the first radio equipment controller. Therefore, the radio equipment first queries, based on the identifier of the first radio equipment controller, the physical resource corresponding to the first radio equipment controller in the first resource table. Then, the radio equipment determines, based on a resource quantity of physical resources indicated by the first physical resource information and a resource quantity of physical resources corresponding to the first radio equipment controller in the first resource table, whether to establish the first carrier.

The radio equipment may determine whether to establish the first carrier in the following two implementations.

In an implementation, when the resource quantity of physical resources indicated by the first physical resource information is less than the resource quantity of physical resources corresponding to the first radio equipment controller, the radio equipment determines to allow establishment of the first carrier, and the radio equipment performs step 604 and step 605.

In another implementation, when the resource quantity of physical resources indicated by the first physical resource information is greater than the resource quantity of physical resources corresponding to the first radio equipment controller, the radio equipment determines that the physical resource corresponding to the first radio equipment controller is insufficient for establishing the first carrier, and the radio equipment performs only step 606 instead of step 604 and step 605.

Step 604: The radio equipment establishes the first carrier by using the physical resource indicated by the first physical resource information.

In this step, when the resource quantity of physical resources indicated by the first physical resource information is less than the resource quantity of physical resources corresponding to the first radio equipment controller, the radio equipment determines to allow the establishment of the first carrier, and establishes the first carrier via a digital processing module and an analog processing module in the radio equipment. The digital processing module includes a circuit or device that has a digital signal processing function, such as an up converter, a down converter, and a digital-to-analog converter. The analog processing module includes a circuit or device that has an analog signal processing function, such as an intermediate frequency amplifier, a filter, a frequency mixer, or a power amplifier.

An implementation in which the radio equipment establishes the first carrier by using the physical resource is not limited in this application. For a manner in which the digital processing module and the analog processing module in the radio equipment establish the first carrier, refer to a manner in a conventional technology.

Step 605: The radio equipment updates, based on the resource quantity of physical resources indicated by the first physical resource information, the resource quantity of physical resources corresponding to the first radio equipment controller in the first resource table.

In this embodiment, after determining to allow the establishment that is of the first carrier and that is based on the first physical resource information, the radio equipment further updates, based on the resource quantity of physical resources indicated by the first physical resource information, the resource quantity of physical resources corresponding to the first radio equipment controller in the first resource table. Specifically, the radio equipment subtracts the resource quantity of physical resources indicated by the first physical resource information from the resource quantity of physical resources corresponding to the first radio equipment controller in the first resource table, to obtain an updated resource quantity of physical resources corresponding to the first radio equipment controller.

Optionally, the radio equipment further stores the first physical resource information, to record the physical resource used to establish the first carrier.

Step 606: The radio equipment sends a carrier establishment response to the first radio equipment controller.

In a possible implementation, if the radio equipment determines, in step 603, that the physical resource corresponding to the first radio equipment controller is insufficient for establishing the first carrier, the radio equipment sends the carrier establishment response to the first radio equipment controller. Content carried in the carrier establishment response indicates that the establishment of the first carrier fails. In this implementation, a specific time sequence between step 606 and step 604 and step 605 is not limited, and step 606 may be performed after step 603.

In another possible implementation, if the radio equipment determines, in step 603, that the physical resource corresponding to the first radio equipment controller is sufficient for establishing the first carrier, and the radio equipment successfully establishes the first carrier in step 604, the radio equipment sends the carrier establishment response to the first radio equipment controller. Content carried in the carrier establishment response indicates that the establishment of the first carrier succeeds. In this implementation, a specific time sequence between step 606 and step 605 is not limited, and step 606 may be performed after step 604.

In this embodiment, the radio equipment can be connected to the plurality of radio equipment controllers, and the radio equipment can obtain the carrier establishment request from one of the plurality of radio equipment controllers, determine, based on the carrier establishment request, the physical resource used to establish the carrier, and then determine, based on the physical resource and the physical resource corresponding to the radio equipment controller in the radio equipment, whether to establish the carrier. Therefore, the plurality of radio equipment controllers can share same radio equipment, so that flexibility of managing the radio equipment by the radio equipment controller can be improved.

In a possible implementation, the radio equipment controller may query usage of the physical resource corresponding to the radio equipment controller. Specifically, the radio equipment receives a resource query message from the first radio equipment controller. The resource query message is used to query usage information of the physical resource corresponding to the first radio equipment of the radio equipment. The resource query message includes the identifier of the first radio equipment controller. The radio equipment queries the usage information of the physical resource corresponding to the first radio equipment controller in the first resource table. The radio equipment sends, to the first radio equipment controller, the usage information of the physical resource corresponding to the first radio equipment controller.

In this implementation, it is proposed that each service processing module may query usage information of a physical resource corresponding to a radio equipment controller, and feed back, to the radio equipment controller, the usage information of the physical resource corresponding to the radio equipment controller. This solution helps prevent the radio equipment from mistakenly reporting, to the radio equipment controller, usage of the physical resource corresponding to the radio equipment controller.

In a possible implementation, the radio equipment may further report fault information at a granularity of a radio equipment controller. Specifically, the radio equipment obtains fault information. The fault information indicates at least one type of faulty physical resource in the radio equipment. The radio equipment determines at least one second radio equipment controller from the at least two radio equipment controllers. The second radio equipment controller is a radio equipment controller that uses the physical resource indicated by the fault information. The radio equipment sends the fault information to the second radio equipment controller.

In this implementation, it is proposed that the radio equipment can detect a fault of the physical resource, and determine a fault impact range based on the fault of the physical resource, that is, which radio equipment controllers (which are referred to as second radio equipment controllers in this implementation) are affected by the faulty physical resource. Then, the radio equipment only sends the fault information to the second radio equipment controller, instead of sending the fault information to another radio equipment controller. In this implementation, the radio equipment can accurately feed back the fault to the radio equipment controller, and the radio equipment is prevented from feeding back the fault to all radio equipment controllers connected to the radio equipment.

In addition, this application provides a computer program product. The computer program product includes one or more computer instructions. When the computer program instructions are loaded and executed on a computer, the procedures or functions according to embodiments of this application are all or partially generated. For example, the method related to the radio equipment in FIG. 6 is implemented. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD) (or referred to as a solid-state driver)), or the like.

In addition, this application further provides a computer-readable storage medium. The storage medium stores a computer program. The computer program is executed by a processor to implement the method related to the radio equipment in FIG. 6.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

## Claims

1. Radio equipment, wherein the radio equipment is connected to at least two radio equipment controllers through a fronthaul interface, and the radio equipment comprises:
an interface module, configured to obtain a carrier establishment request from a first radio equipment controller, wherein the first radio equipment controller is one of the at least two radio equipment controllers connected to the radio equipment, and the carrier establishment request is used to request to establish a first carrier of the first radio equipment controller; and
a processing module, configured to determine first physical resource information based on the carrier establishment request, wherein the first physical resource information indicates a physical resource required for establishing the first carrier, wherein
the processing module is further configured to determine, based on the first physical resource information and a physical resource corresponding to the first radio equipment controller in the radio equipment, whether to establish the first carrier, wherein the at least two radio equipment controllers correspond to different physical resources in the radio equipment.

2. The radio equipment according to claim 1, wherein the radio equipment further comprises a storage module; and
the storage module is configured to store a first resource table, wherein the first resource table comprises the physical resource corresponding to each of the at least two radio equipment controllers.

3. The radio equipment according to claim 1 or 2, wherein the carrier establishment request comprises an identifier of the first radio equipment controller, and the identifier of the first radio equipment controller indicates to apply for the physical resource corresponding to the first radio equipment controller; and
the processing module is further configured to query, based on the identifier of the first radio equipment controller, the physical resource corresponding to the first radio equipment controller in the first resource table.

4. The radio equipment according to claim 3, wherein the processing module comprises one central control module and at least two service processing modules, and the at least two radio equipment controllers are in one-to-one correspondence with the at least two service processing modules;
the central control module is configured to: determine, from the at least two service processing modules based on the identifier of the first radio equipment controller in the carrier establishment request, a first service processing module corresponding to the first radio equipment controller, and transmit the carrier establishment request to the first service processing module;
the first service processing module is configured to: determine the first physical resource information based on the carrier establishment request, and transmit the first physical resource information to the central control module; and
the central control module is configured to determine, based on the first physical resource information and the physical resource corresponding to the first radio equipment controller, whether to establish the first carrier.

5. The radio equipment according to claim 4, wherein the radio equipment further comprises a carrier establishment module;
the central control module is specifically configured to:
when a resource quantity of physical resources indicated by the first physical resource information is less than a resource quantity of physical resources corresponding to the first radio equipment controller, determine to allow establishment of the first carrier, and transmit the first physical resource information to the carrier establishment module; and
the carrier establishment module is configured to establish the first carrier by using the physical resource indicated by the first physical resource information.

6. The radio equipment according to claim 5, wherein the central control module is further configured to update, based on the resource quantity of physical resources indicated by the first physical resource information, the resource quantity of physical resources corresponding to the first radio equipment controller in the first resource table.

7. The radio equipment according to claim 4, wherein
the central control module is specifically configured to:
when a resource quantity of physical resources indicated by the first physical resource information is greater than a resource quantity of physical resources corresponding to the first radio equipment controller, send a first notification message to the first service processing module, wherein the first notification message indicates that the physical resource corresponding to the first radio equipment controller is insufficient for establishing the first carrier; and
the first service processing module is further configured to control the interface module to send a carrier establishment response to the first radio equipment controller, wherein the carrier establishment response indicates that the establishment of the first carrier fails.

8. The radio equipment according to any one of claims 3 to 7, wherein the carrier establishment request further comprises a first carrier parameter, and the first carrier parameter indicates a characteristic of the first carrier; and
the first service processing module is specifically configured to generate the first physical resource information based on the first carrier parameter according to a preset rule corresponding to the first radio equipment controller, wherein preset rules corresponding to different radio equipment controllers in the at least two radio equipment controllers are different, and the first physical resource information comprises information about at least one of a frequency band resource, a power resource, a channel resource, a carrier resource, and a flow quantity resource.

9. The radio equipment according to any one of claims 4 to 8, wherein
the interface module is further configured to receive a resource query message from the first radio equipment controller, wherein the resource query message is used to query usage information of the physical resource corresponding to the first radio equipment controller, and the resource query message comprises the identifier of the first radio equipment controller;
the central control module is further configured to transmit, based on the identifier of the first radio equipment controller, the resource query message to the first service processing module corresponding to the first radio equipment controller;
the first service processing module is further configured to query the usage information of the physical resource corresponding to the first radio equipment controller; and
the interface module is further configured to send, to the first radio equipment controller, the usage information of the physical resource corresponding to the first radio equipment controller.

10. The radio equipment according to any one of claims 4 to 9, wherein the central control module is further configured to:
obtain fault information, wherein the fault information indicates a faulty physical resource in the radio equipment;
determine at least one second radio equipment controller from the at least two radio equipment controllers, wherein the second radio equipment controller is a radio equipment controller that uses the physical resource indicated by the fault information; and
control the interface module to send the fault information to the second radio equipment controller.

11. The radio equipment according to any one of claims 2 to 10, wherein the interface module is further configured to obtain a resource configuration message, wherein the resource configuration message comprises the first resource table.

12. A first radio equipment controller, wherein the first radio equipment controller is any one of at least two radio equipment controllers connected to radio equipment, and the first radio equipment controller comprises:
a processing module, configured to generate a carrier establishment request, wherein the carrier establishment request is used to request to establish a first carrier of the first radio equipment controller, the carrier establishment request comprises an identifier of the first radio equipment controller, the identifier of the first radio equipment controller indicates to apply for a physical resource corresponding to the first radio equipment controller in the radio equipment, and the at least two radio equipment controllers correspond to different physical resources in the radio equipment; and
an interface module, configured to send the carrier establishment request to the radio equipment.

13. A resource management method, comprising:
obtaining, by radio equipment, a carrier establishment request from a first radio equipment controller, wherein the first radio equipment controller is one of at least two radio equipment controllers connected to the radio equipment, and the carrier establishment request is used to request to establish a first carrier of the first radio equipment controller;
determining, by the radio equipment, first physical resource information based on the carrier establishment request, wherein the first physical resource information indicates a physical resource required for establishing the first carrier; and
determining, by the radio equipment based on the first physical resource information and a physical resource corresponding to the first radio equipment controller in the radio equipment, whether to establish the first carrier, wherein the at least two radio equipment controllers correspond to different physical resources in the radio equipment.

14. The method according to claim 13, wherein the radio equipment stores a first resource table, the first resource table comprises the physical resource corresponding to each of the at least two radio equipment controllers.

15. The method according to claim 13 or 14, wherein the carrier establishment request comprises an identifier of the first radio equipment controller, and the identifier of the first radio equipment controller indicates to apply for the physical resource corresponding to the first radio equipment controller; and
before the determining, by the radio equipment based on the first physical resource information and a physical resource corresponding to the first radio equipment controller in the radio equipment, whether to establish the first carrier, the method further comprises:
querying, by the radio equipment based on the identifier of the first radio equipment controller, the physical resource corresponding to the first radio equipment controller in the first resource table.

16. The method according to any one of claims 13 to 15, wherein the determining, by the radio equipment based on the first physical resource information and a physical resource corresponding to the first radio equipment controller in the radio equipment, whether to establish the first carrier comprises:
when a resource quantity of physical resources indicated by the first physical resource information is less than a resource quantity of physical resources corresponding to the first radio equipment controller, establishing, by the radio equipment, the first carrier by using the physical resource indicated by the first physical resource information.

17. The method according to claim 16, wherein the method further comprises:
updating, by the radio equipment based on the resource quantity of physical resources indicated by the first physical resource information, the resource quantity of physical resources corresponding to the first radio equipment controller in the first resource table.

18. The method according to any one of claims 13 to 17, wherein the carrier establishment request further comprises a first carrier parameter, and the first carrier parameter indicates a characteristic of the first carrier; and
the determining, by the radio equipment, first physical resource information based on the carrier establishment request comprises:
generating, by the radio equipment, the first physical resource information based on the first carrier parameter according to a preset rule corresponding to the first radio equipment controller, wherein preset rules corresponding to different radio equipment controllers in the at least two radio equipment controllers are different, and the first physical resource information comprises information about at least one of a frequency band resource, a power resource, a channel resource, a carrier resource, and a flow quantity resource.

19. A communication apparatus, comprising a processor and a memory, wherein
the memory stores a computer program; and
the processor invokes the computer program, to enable the communication apparatus to perform the method according to any one of claims 13 to 18.

20. A communication system, comprising
the radio equipment according to any one of claims 1 to 11, and the radio equipment controller according to claim 12.

21. A computer-readable storage medium, storing instructions, wherein when the instructions are run on a computer, the computer is enabled to perform the method according to any one of claims 13 to 18.

22. A computer program product comprising instructions, wherein when the instructions are run on a computer, the computer is enabled to perform the method according to any one of claims 13 to 18.
